(19) **Europäisches Patentamt / European Patent Office / Office européen des brevets**

(11) **EP 1 909 404 B1**

(12) **EUROPÄISCHE PATENTSCHRIFT**

(45) Veröffentlichungstag und Bekanntmachung des Hinweises auf die Patenterteilung:
**01.04.2009 Patentblatt 2009/14**

(51) Int Cl.:
*H04B 3/02* (2006.01)   *H04L 25/02* (2006.01)

(21) Anmeldenummer: **06020754.5**

(22) Anmeldetag: **02.10.2006**

(54) **Verfahren zur Datenübertragung über eine Potentialbarriere**

Data transmission method over a potential barrier

Procédé de transmission de données sure une barrière de potentiel

(84) Benannte Vertragsstaaten:
**DE FR GB IT**

(43) Veröffentlichungstag der Anmeldung:
**09.04.2008 Patentblatt 2008/15**

(73) Patentinhaber: **Infineon Technologies Austria AG**
**9500 Villach (AT)**

(72) Erfinder: **Feldtkeller, Martin**
**81543 München (DE)**

(74) Vertreter: **Bickel, Michael**
**Westphal, Mussgnug & Partner**
**Patentanwälte**
**Herzog-Wilhelm-Strasse 26**
**80331 München (DE)**

(56) Entgegenhaltungen:
**WO-A2-02/086969      DE-C1- 10 205 705**

**Beschreibung**

Die vorliegende Erfindung betrifft ein Verfahren zur Datenübertragung über eine Potentialbarriere.

Eine Übertragung von Daten über eine Potentialbarriere ist beispielsweise in Datenübertragungsstrecken zur Ansteuerung von Halbleiterschaltern, insbesondere von High-Side-Schaltern in Halbbrückenschaltungen, oder in Datenübertragungsstrecken zur Datenübertragung in industriellen Steuerungen, erforderlich. Zur Entkopplung der Potentiale der Sendeseite und der Empfängerseite kann bei einem solchen Verfahren beispielsweise ein induktiver Übertrager mit einer Primärwicklung und einer Sekundärwicklung verwendet werden.

Die DE10205705 beschreibt eine integrierbare Schaltungsanordnung zur potenzialfreien Signalübertragung bei der eine Primärwicklung einer Ansteuerschaltung vorgeschaltet ist, die die Flanken eines logischen Eingangssignals in dem Eingangssignal entsprechende primärseitige Impulse umwandelt, wobei durch jeden primären Impuls in der Primärwicklung den Flanken des Eingangssignals zuordenbare sekundäre Impulse in der Sekundärwicklung erzeugt werden. Mit der Sekundärwicklung ist eine durch die sekundären Impulse angesteuerte Auswahlschaltung verschaltet, die die sekundären Impulse nach jeweiliger Zuordnung zur Flanke des Eingangssignals trennt. Schliesslich ist eine der Auswahlschaltung nachfolgende Verriegelungsschaltung vorgesehen, die getrennte sekundäre Impulse miteinander vergleicht und bei gleichzeitigem Auftreten getrennter sekundärer Impulse und/oder bei in kurzzeitiger Folge auftretenden sekundären Impulsen eine Weiterleitung der sekundären Impulse zu einem Speicherelement unterbindet, das durch sekundäre Impulse der einen Polarität gesetzt und durch sekundäre Impulse der anderen Polarität rückgesetzt wird und ein Ausgangssignal führt.

Die US 6,525,566 beschreibt ein Datenübertragungsverfahren über einen Kanal mit zwei induktiven Übertragern. Zur Übertragung eines zweiwertigen Nutzsignals ist bei diesem bekannten Verfahren vorgesehen, ein Oszillatorsignal zur Verfügung zu stellen, das der Primärwicklung eines ersten der beiden Übertrager direkt zugeführt ist und das der Primärwicklung eines zweiten der beiden Übertrager moduliert durch das Nutzsignal zugeführt ist. Die Modulation erfolgt dabei derart, dass das dem zweiten Übertrager zugeführte Oszillatorsignal abhängig von dem momentanen Signalpegel des Nutzsignals ein zu dem Oszillatorsignal des ersten Übertragers gleichphasiges oder gegenphasiges Signal ist.

Ein weiteres Verfahren zur Datenübertragung über einen zwei induktive Übertrager aufweisenden Kanal ist in der DE 10 2004 039 218 A1 beschrieben.

Aufgabe der vorliegenden Erfindung ist es, ein robustes Verfahren zur Datenübertragung über eine Potentialbarriere zur Verfügung zu stellen, das eine hohe Datenrate ermöglicht.

Diese Aufgabe wird durch ein Verfahren nach Anspruch 1 gelöst. Vorteilhafte Ausgestaltungen der Erfindung sind Gegenstand der Unteransprüche.

Bei diesem Verfahren zur Übertragung einer Datenfolge über eine Potentialbarriere ist vorgesehen, einen ersten Übertrager mit einer Primärwicklung und einer Sekundärwicklung, der einen Ruhezustand und einen ersten und einen zweiten Aktivierungszustand annehmen kann, und einen zweiten Übertrager mit einer Primärwicklung und einer Sekundärwicklung, der einen Ruhezustand und einen ersten und einen zweiten Aktivierungszustand annehmen kann, zur Verfügung zu stellen und die Datenfolge derart auf die Aktivierungszustände des ersten und zweiten Übertragers umzusetzen, dass der erste und zweite Übertrager abwechselnd für eine Aktivierungsdauer einen Aktivierungszustand annehmen, wobei eine Folge von Zustandsübergängen, die jeweils eine Deaktivierung eines Übertragers und eine Aktivierung des anderen Übertragers umfassen, von der Datenfolge abhängig ist.

Die vorliegende Erfindung wird nachfolgend anhand von Figuren erläutert.

Figur 1   zeigt schematisch eine Datenübertragungsstrecke mit einem zwei induktive Übertrager aufweisenden Übertragungskanal.

Figur 2   zeigt beispielhaft zeitliche Verläufe ausgewählter Signale bei der Übertragung einer Datensequenz bei dem erfindungsgemäßen Übertragungsverfahren.

Figur 3   veranschaulicht mögliche Zustandsübergänge zwischen Aktivierungszuständen der beiden induktiven Übertrager bei dem erfindungsgemäßen Verfahren.

Figur 4   veranschaulicht zeitliche Verläufe sekundärseitig an den Übertragern abgreifbarer Spannungen bei unterschiedlichen Zustandsübergängen.

Figur 5   veranschaulicht Kombinationen jeweils zweier Zustandsübergänge für die Übertragung eines 3 Bit-Signals.

Figur 6   veranschaulicht Kombinationen von zwei bzw. drei Zustandsübergängen für die Übertragung eines 5 Bit-Datenwortes.

Figur 7 veranschaulicht die Ansteuerung der induktiven Übertrager abhängig von einem 3 Bit-Datenwort anhand eines Ausführungsbeispiels.

Figur 8 zeigt ein Realisierungsbeispiel für eine Treiberschaltung zur Ansteuerung der induktiven Übertrager des Übertragungskanals.

Figur 9 zeigt ausschnittsweise eine Datenübertragungsstrecke mit zwei induktiven Übertragern, die jeweils eine Primärwicklung und eine Sekundärwicklung mit zwei Wicklungsabschnitten aufweisen, und mit einer Empfängerschaltung zur Rückgewinnung eines gesendeten Signals aus Spannungen über den Sekundärwicklungen der induktiven Übertrager.

Figur 10 zeigt schematisch eine Datenquelle mit einem Kodierer.

Figur 11 veranschaulicht ein Trellisdiagramm eines erfindungsgemäßen Kodierungsverfahrens.

Figur 12 veranschaulicht eine Kodierung einer Datenfolge unter Verwendung eines Kodierverfahrens mit einem Trellisdiagramm gemäß Figur 11.

Figur 13 zeigt eine mögliche Zuordnung von zu übertragenden 3-Bit-Datenworten zu Zustandsfolgen mit zwei Zustandsübergängen der Übertrager.

Figur 14 zeigt eine mögliche Zuordnung von zu übertragenden 3-Bit-Datenworten zu Zustands folgen mit drei Zustandsübergängen der Übertrager.

Figur 15 veranschaulicht einen ersten Fehlerkorrekturmodus des Kodierverfahrens.

Figur 16 veranschaulicht ein erstes mögliches Fehlerszenario bei der Übertragung von Datenworten.

Figur 17 veranschaulicht ein zweites mögliches Fehlerszenario bei der Übertragung von Datenworten.

Figur 18 veranschaulicht ein drittes mögliches Fehlerszenario bei der Übertragung von Datenworten.

Figur 19 veranschaulicht einen zweiten Fehlerkorrekturmodus des Kodierverfahrens.

In den Figuren bezeichnen, sofern nicht anders angegeben, gleiche Bezugszeichen gleiche Schaltungskomponenten und Signale mit gleicher Bedeutung.

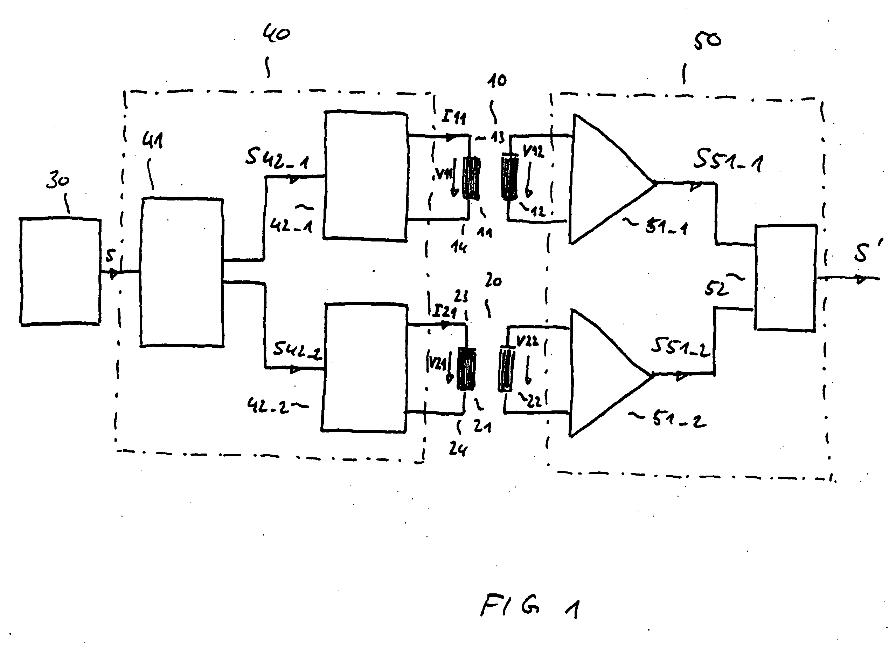

Zum besseren Verständnis des nachfolgend erläuterten Datenübertragungsverfahrens zeigt Figur 1 schematisch eine Datenübertragungsstrecke zur Übertragung eines von einer Datenquelle 30 bereitgestellten Datensignals S über eine Potentialbarriere. Ein Übertragungskanal dieser Datenübertragungsstrecke weist zwei induktive Übertrager 10, 20 auf, die jeweils eine Primärwicklung 11, 21 und eine Sekundärwicklung 12, 22 aufweisen. Diese induktiven Übertrager 10, 20 sind beispielsweise sogenannte Luftspulenübertrager, die auch als transformatorkernlose Transformatoren (Coreless Transformer) bezeichnet werden. Solche Transformatoren besitzen keine Transformatorkerne zur Verstärkung einer induktiven Kopplung zwischen den Primärwicklungen und den Sekundärwicklungen.

Komponenten der in Figur 1 dargestellten Datenübertragungsstrecke, die an die Primärwicklungen 11, 21 direkt oder indirekt angeschlossen sind, werden nachfolgend als primärseitige Komponenten der Datenübertragungsstrecke bezeichnet, während Komponenten, die direkt oder indirekt an die Sekundärwicklungen 12, 22 angeschlossen sind, als sekundärseitige Komponenten der Datenübertragungsstrecke bezeichnet werden.

Die Datenübertragungsstrecke umfasst eine Datenquelle 30, die ein zu übertragendes Datensignal S zur Verfügung stellt. Dieses Datensignal S ist beispielsweise ein binäres Datensignal. Dieses Datensignal S kann ein reines Nutzsignal sein, das ausschließlich Nutzinformationen enthält, kann jedoch auch ein kodiertes Nutzsignal sein, das neben Nutzinformationen redundante Informationen zur Fehlererkennung und/oder Fehlerbeseitigung enthält.

Die Datenübertragungsstrecke umfasst außerdem eine Modulationseinheit 40, der das Datensignal S zugeführt ist und die das Datensignal S auf Sendesignale V11, V21 zur Übertragung über die induktiven Übertrager 10, 20 umsetzt. Diese Sendesignale V11, V21 sind in dem Beispiel Spannungen an den Primärwicklungen 11, 21, die nachfolgend als Primärspannungen V11, V21 bezeichnet sind. Die Modulationseinheit 40 umfasst eine Zuordnungseinheit 41 sowie zwei Treiberschaltungen 42_1, 42_2, von denen eine erste Treiberschaltung 42_1 an die Primärwicklung 11 des ersten Übertragers 10 und eine zweite Treiberschaltung 42_2 an die Primärwicklung 21 des zweiten Übertragers 20 angeschlossen ist. Die Zuordnungseinheit 41 bildet das Datensignal S auf erste und zweite Treibersignale S42_1, S42_2 ab, von denen ein erstes Treibersignal S42_1 der ersten Treiberschaltung 42_1 und ein zweites Treibersignal S42-2 der zweiten Treiberschaltung 42_2 zugeführt ist.

Bei dem erfindungsgemäßen Datenübertragungsverfahren werden die Sendesignale V11, V21 so erzeugt, dass sie wahlweise drei unterschiedliche Signalpegel annehmen, nämlich einen positiven Signalpegel, einen negativen Signalpegel oder Null. Der Betrag des positiven Signalpegels entspricht hierbei vorzugsweise dem Betrag des negativen Signalpegels. Abhängig von den Sendesignalen V11, V21 nehmen die induktiven Übertrager 10, 20 einen ersten Aktivierungszustand, einen zweiten Aktivierungszustand oder einen Ruhezustand an. Für die nachfolgende Erläuterung wird davon ausgegangen, dass ein erster Aktivierungszustand eines der Übertrager 10, 20 dann vorliegt, wenn dessen Sendesignal V11, V21 einen positiven Signalpegel aufweist, dass ein zweiter Aktivierungszustand des Übertragers 10, 20 dann vorliegt, wenn dessen Sendesignal V11, V21 einen negativen Signalpegel annimmt und dass ein Ruhezustand des Übertragers 10, 20 dann vorliegt, wenn das Sendesignal V11, V21 Null ist. Der erste Aktivierungszustand des ersten Übertragers 10, also ein Zustand, bei dem eine positive Spannung V11 an dessen Primärwicklung 11 anliegt, wird nachfolgend mit 1P bezeichnet. 1N bezeichnet den zweiten Aktivierungszustand des ersten Übertragers 10, also den Zustand, bei dem eine negative Spannung V11 an der Primärwicklung 11 anliegt. Entsprechend bezeichnet 2P den ersten Aktivierungszustand des zweiten Übertragers 20 und 2N den zweiten Aktivierungszustand dieses zweiten Übertragers 20.

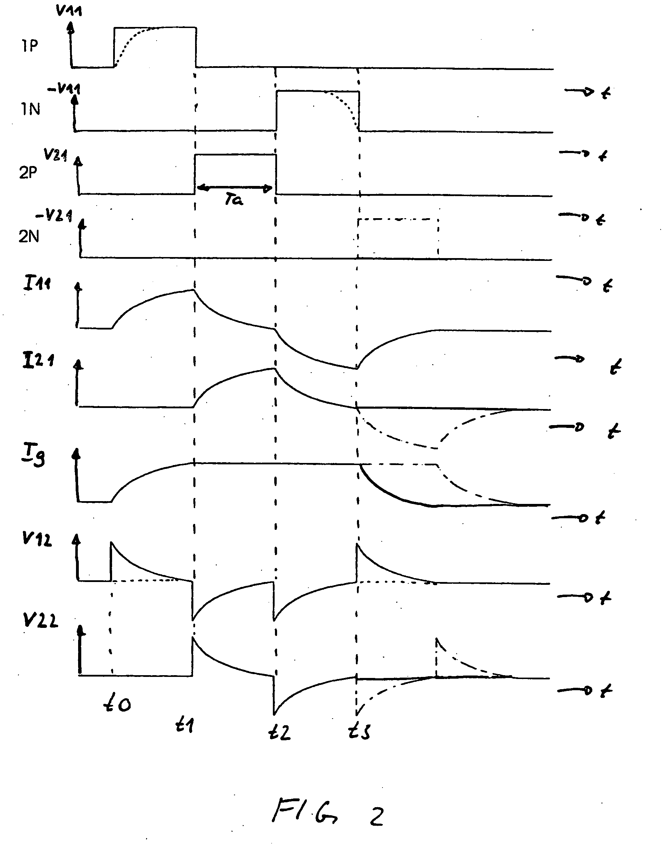

Figur 2 zeigt beispielhaft eine Abfolge von Aktivierungszuständen des ersten und zweiten Übertragers 10, 20 bei dem erfindungsgemäßen Datenübertragungsverfahren. In Figur 2 sind für jeden der Aktivierungszustände 1P, 1N, 2P, 2N jeweils eigene zeitliche Verläufe dargestellt. Die rechteckförmigen Signalimpulse im zeitlichen Verlauf eines Aktivierungszustandes kennzeichnen hierbei solche Zeitdauern, während derer der jeweilige Aktivierungszustand vorliegt. Außer den zeitlichen Verläufen der Aktivierungszustände sind in Figur 2 auch die zeitlichen Verläufe der die Primärwicklungen durchfließenden Primärströme I11, I21, der zeitliche Verlauf der Gesamtstromaufnahme Ig der beiden Übertrager 10, 20, die der Summe der beiden Primärströme I11, I21 entspricht, sowie die zeitlichen Verläufe von Sekundärspannungen V12, V22 über den Sekundärwicklungen 12, 22 der beiden Übertrager dargestellt.

Die Übertragung von Nutzinformation über einen induktiven Übertrager setzt bekanntlich steile Signalflanken einer an die Primärwicklung des Übertragers angelegten Primärspannung voraus. Ein steiler Spannungsanstieg oder Spannungsabfall der Primärspannung führt sekundärseitig zu einem Spannungsimpuls, der zur Rückgewinnung der übertragenen Nutzinformation ausgewertet werden kann. Steile steigende Flanken der Primärspannungen V11, V21 führen bei der in Figur 1 dargestellten Datenübertragungsstrecke zu positiven Spannungsimpulsen der Sekundärspannungen V12, V22, während steile fallende Flanken der Primärspannungen V11, V21 zu negativen Spannungsimpulsen der Sekundärspannungen V12, V22 führen. Steile positive Flanken der Primärspannungen V11, V21 treten Bezug nehmend auf Figur 2 dann auf, wenn die Übertrager 10, 20 vom Ruhezustand in den ersten Aktivierungszustand 1P bzw. 2P übergehen und dann, wenn die beiden Übertrager 10, 20 vom zweiten Aktivierungszustand 1N bzw. 2N in den Ruhezustand übergehen. Bei dem erfindungsgemäßen Verfahren zur Datenübertragung ist vorgesehen, die beiden Übertrager 10, 20 jeweils abwechselnd in einen der beiden möglichen Aktivierungszustände zu versetzen. Die Zeitdauer, für welche die Übertrager 10, 20 hierbei jeweils aktiviert werden, wird nachfolgend als Aktivierungsdauer Ta bezeichnet. Zum Zeitpunkt der Deaktivierung des einen Übertragers und der Aktivierung des anderen Übertragers entstehen sekundärseitig sowohl ein Spannungsimpuls an der ersten Sekundärwicklung 12 als auch an der zweiten Sekundärwicklung 22. Solche Zeitpunkte, zu denen einer der Übertrager aktiviert und der andere Übertrager deaktiviert wird, sind in Figur 2 mit t1, t2, t3 bezeichnet.

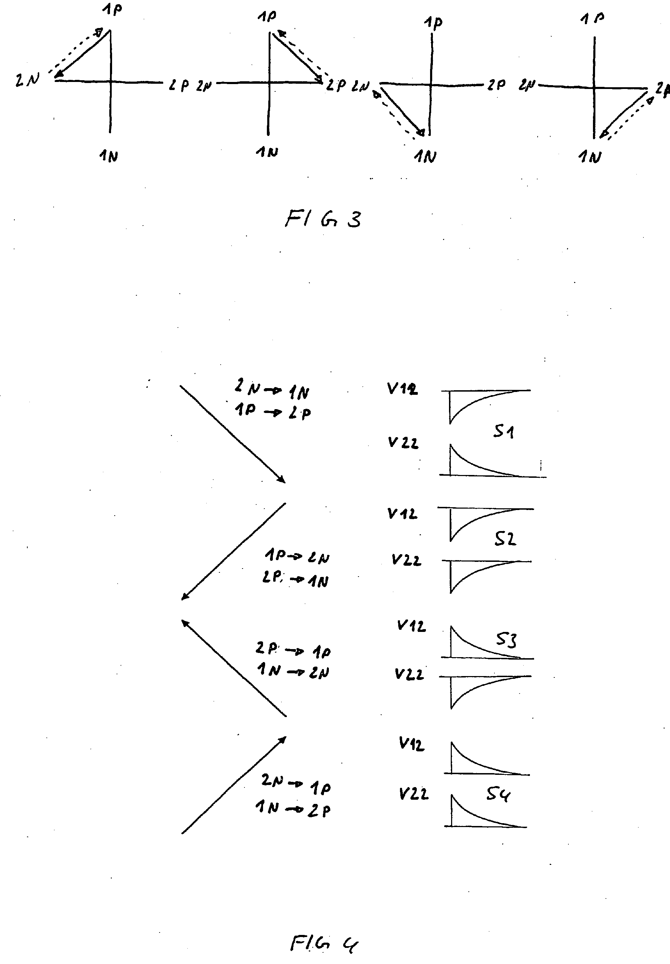

Übergänge von einem Aktivierungszustand eines Übertragers zu einem Aktivierungszustand des anderen Übertragers werden nachfolgend als Zustandsübergänge bezeichnet. Die Nutzinformation wird bei dem erfindungsgemäßen Verfahren durch solche Zustandsübergänge, die sekundärseitig zu Spannungsimpulsen an beiden Sekundärwicklungen 12, 22 führen, übertragen. Für die weitere Erläuterung werden diese Zustandsübergänge nachfolgend in Form von Vektoren dargestellt. Bezug nehmend auf Figur 3 werden die einzelnen Aktivierungszustände hierzu kreuzförmig in der Zeichenebene aufgetragen, wobei die zwei unterschiedlichen Aktivierungszustände eines Übertragers jeweils gegenüberliegend angeordnet sind. Im Uhrzeigersinn sind beispielsweise der erste Aktivierungszustand 1P des ersten Übertragers 10, der erste Aktivierungszustand 2P des zweiten Übertragers 20, der zweite Aktivierungszustand 1N des ersten Übertragers 10 und der zweite Aktivierungszustand 2N des zweiten Übertragers 20 aufgetragen. Vektoren, die die Zustandsübergänge bezeichnen und die nachfolgend als Übergangsvektoren bezeichnet werden, verlaufen hierbei jeweils von der den Ausgangszustand bezeichnenden Position zu der den Endzustand bezeichnenden Position. Insgesamt können acht verschiedene Zustandsübergänge auftreten. Dies Zustandsübergänge sind hinsichtlich der sekundärseitig auftretenden Signalmuster jedoch nicht eindeutig, sondern jeweils zwei der möglichen Zustandsübergänge führen zu gleichen sekundärseitigen Signalmustern, wie nachfolgend anhand von Figur 4 erläutert wird.

Figur 4 veranschaulicht die vier möglichen sekundärseitigen Signalmuster, die mit S1 bis S4 bezeichnet sind, und die Zustandsübergänge, die zu den jeweiligen Signalmustern führen anhand der den Zustandsübergängen zugeordneten Übergangsvektoren. Ein sekundärseitiges Signalmuster umfasst hierbei zwei Spannungsverläufe, einen Spannungsverlauf an der ersten Sekundärwicklung 12 und einen Spannungsverlauf an der zweiten Sekundärwicklung 22, und ist in Figur 4 jeweils rechts dargestellt. Der einem Signalmuster zugehörige Übergangsvektor ist in Figur 4 links dargestellt. Zum besseren Verständnis wird das Zustandekommen eines der Signalmuster nachfolgend erläutert. Betrachtet sei das oben in Figur 4 dargestellte sekundärseitige Signalmuster S1, bei dem die erste Sekundärspannung V12 einen negativen Spannungsimpuls aufweist und die zweite Sekundärspannung V22 einen positiven Spannungsimpuls aufweist. Dieses Signalmuster S1 kann auftreten bei einem Übergang von dem zweiten Aktivierungszustand 2N des zweiten Übertragers 20 auf den zweiten Aktivierungszustand 1N des ersten Übertragers 10 oder bei einem Übergang von ersten Aktivierungszustand 1P des ersten Übertragers 10 auf den ersten Aktivierungszustand 2P des zweiten Übertragers 20. Bei beiden Zustandsübergängen weist die Primärspannung V11 eine negative Signalflanke und die zweite Primärspannung V21 eine positive Signalflanke auf.

Sekundärseitig können bei dem erfindungsgemäßen Datenübertragungsverfahren sekundärseitig vier verschiedene Signalmuster auftreten, die in Figur 4 mit S1 bis S4 bezeichnet sind. Diese Signalmuster können jedoch nicht in einer beliebigen Reihenfolge auftreten, was anhand der Vektordarstellung in Figur 3 dadurch deutlich wird, dass ausgehend von einem Aktivierungszustand eines der Übertrager lediglich zwei Zustandsübergänge möglich sind. Anhand von Figur 2 wird die Tatsache, dass die vier verschiedenen Signalmuster nicht in beliebiger Reihenfolge auftreten können, dadurch ersichtlich, dass auf einen sekundärseitigen Signalimpuls, der bei Aktivierung eines Übertragers entsteht, stets ein sekundärseitiger Signalimpuls mit entgegengesetztem Vorzeichen folgt, der bei Deaktivierung des jeweiligen Übertragers entsteht.

Das zuvor erläuterte Grundkonzept, die beiden Übertrager abwechselnd in zwei mögliche Aktivierungszustände zu versetzen, eignet sich auf verschiedene Weise zur Übertragung eines Datensignals. Wie bereits erwähnt, lässt sich anhand eines einzelnen sekundärseitigen Signalmusters der Zustandsübergang, der zu diesem Signalmuster geführt hat, nicht eindeutig bestimmen. Es lässt sich jedoch zeigen, dass bei Einhaltung einer Randbedingung zwei zeitlich aufeinanderfolgende Zustandsübergänge, die zu zwei zeitlich aufeinanderfolgenden Signalmustern führen, aus diesen Signalmustern eindeutig bestimmt werden können, sofern die Zustandsübergänge so gewählt sind, dass sie zwischen drei unterschiedlichen Aktivierungszuständen stattfinden, sofern also auf einen Übergang von einem ersten Zustand auf einen zweiten Zustand kein Übergang zurück auf den ersten Zustand folgt.

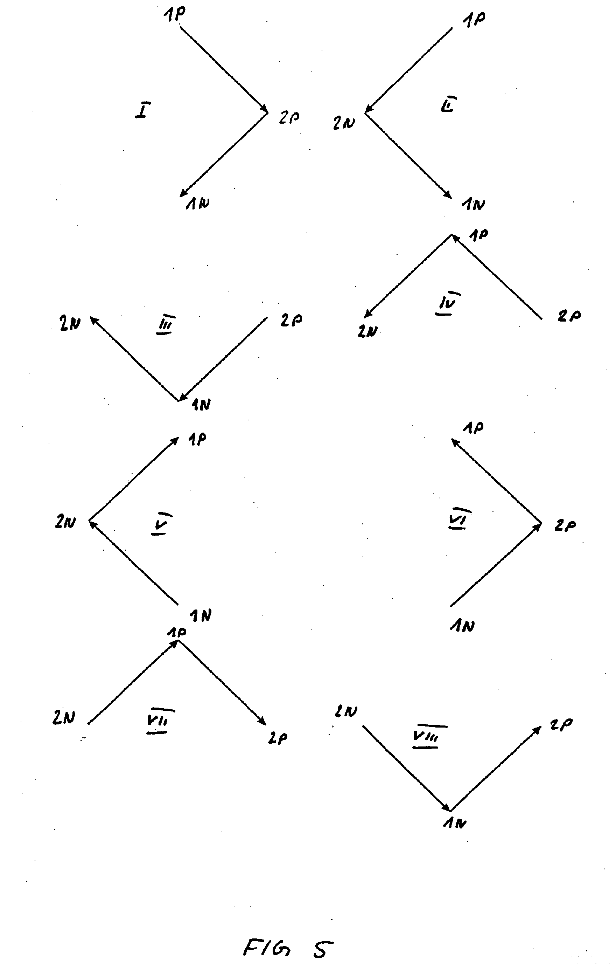

Insgesamt können acht verschiedene Folgen mit zwei aufeinanderfolgenden Zustandsübergängen erzeugt werden, die in Figur 5 anhand der Übergangsvektoren dargestellt und die mit den Nummern I bis VIII nummeriert sind. Die Eindeutigkeit dieser Folgen mit jeweils zwei Zustandsübergängen wird nachfolgend anhand eines Beispiels erläutert:

Betrachtet sei die Zustandsfolge I, die die Zustandsübergänge 1P-2P und 2P-1N aufweist. Der Zustandsübergang 1P-2P führt Bezug nehmend auf Figur 4 sekundärseitig zu dem Signalmuster S1, das auch durch den Zustandsübergang 2N-1N erzeugt wird. An den Aktivierungszustand 2P am Ende des ersten Zustandsübergangs der betrachteten Folge I kann sich nur ein Zustandsübergang 2P-1N auf den Aktivierungszustand 1N anschließen, während sich an den Aktivierungszustand 1N des Zustandsübergangs 2N-1N nur ein Zustandsübergang 1N-2P zu dem Aktivierungszustand 2P anschließen kann. Die Zustandsübergänge 2P-1N und 1N-2P führen sekundärseitig jedoch zu unterschiedlichen Signalmustern, nämlich dem Signalmuster S2 einerseits und dem Signalmuster S4 andererseits woraus unmittelbar folgt, dass zwei aufeinanderfolgende Zustandsübergänge zu einer eindeutig unterscheidbaren Folge von zwei sekundärseitigen Signalmustern führen.

Da acht unterschiedliche Folgen mit je zwei Zustandsübergängen möglich sind, ist bei einer Ausführungsform des erfindungsgemäßen Datenübertragungsverfahrens vorgesehen, jeweils ein 3-Bit-Datenwort der Datenfolge auf eine Sendesignalsequenz mit zwei Zustandsübergängen abzubilden. Eine solche Sendesignalsequenz umfasst drei unterschiedliche und zeitlich aufeinanderfolgende Sendesignale, die im zeitlichen Wechsel an die beiden Transformatoren 10, 20 angelegt werden. Eine Sendesignalsequenz, die zu zwei Zustandsübergängen führt, ist in Figur 2 in durchgezogenen Linien dargestellt. Die in dem Beispiel dargestellte Sendesignalsequenz mit einer zeitlichen Abfolge eines positiven Spannungsimpulses +V11 an der ersten Primärwicklung 11, eines positiven Spannungsimpulses +V21 an der zweiten Primärwicklung 21 und eines negativen Spannungsimpulses -V11 an der ersten Primärwicklung 11 repräsentiert die Zustandsfolge 1P-2P-1N, die sekundärseitig zu den Signalmustern S1 zum Zeitpunkt t1 und S2 zum Zeitpunkt t2 führt.

Für die Informationsübertragung relevant sind bei dem erfindungsgemäßen Verfahren Zustandsübergänge von einem der Aktivierungszustände eines der Transformatoren auf einen Aktivierungszustand des anderen der Transformatoren. Zu den Zeitpunkten solcher Zustandsübergänge, beispielsweise den Zeitpunkten t1 und t2 in Figur 2, werden primärseitig steile Spannungsflanken der Sendesignale erzeugt, die sekundärseitigen zu Spannungsimpulsen an beiden Sekundärwicklungen 12, 22 führen.

Sekundärseitige Spannungsimpulse an nur einer der Sekundärspulen wie sie in Figur 2 zu den Zeitpunkten t0 und t3 am Beginn des ersten Sendesignals der Sendesignalsequenz und am Ende des letzten Sendesignals der Sendesignalsequenz auftreten, werden für die Informationsübertragung nicht benötigt. Zur Vermeidung solcher Signalimpulse an nur einer Sekundärwicklung besteht die Möglichkeit, das erste Sendesignal und das letzte Sendesignal der Sendesignalsequenz derart zu formen, dass der Betrag der Spannung des ersten Sendesignals der Sendesignalsequenz am Beginn dieses Sendesignals langsam ansteigt und dass der Betrag der Spannung des letzten Sendesignals der Sendesignalsequenz am Ende dieses letzten Sendesignals langsam abfällt. Dies ist in Figur 2 gepunktet dargestellt.

Dieses langsame Ansteigen der Spannung zu Beginn der Sendesignalsequenz und das langsame Absinken der Primärspannung am Ende der Sendesignalsequenz führt dazu, dass zu Beginn der Sendesignalsequenz und am Ende der Sendesignalsequenz keine oder nur kleine Spannungsimpulse in den Sekundärwicklungen 12, 22 induziert werden, was für den Spannungsverlauf der Spannung in V12, V22 über den Sekundärwicklungen 12, 22 in Figur 2 ebenfalls gepunktet dargestellt ist.

Das erfindungsgemäße Verfahren ermöglicht eine selbstsynchronisierende Datenübertragung. Eine zusätzliche Übertragung eines Taktsignals zur Datenrückgewinnung ist bei diesem Verfahren nicht erforderlich. Darüber hinaus ist bei diesem Verfahren die Gesamtstromaufnahme Ig der Modulationsschaltung 40 während der Datenübertragung wenigstens annähernd konstant, wodurch EMV-Störstrahlungen ausgehend von Versorgungsleitungen (nicht dargestellt) der Modulationsschaltung 40 vermieden werden.

Wie bereits erläutert, lassen sich acht unterschiedliche Signalsequenzen mit zwei aufeinanderfolgenden Zustandsübergängen unterscheiden, die in Figur 5 dargestellt sind. Diese acht Zustandsübergänge lassen sich aus der Zustandsfolge I (1P-2P-1N) ableiten, indem die vektorielle Darstellung dieser Zustandsfolge in 90°-Schritten im Uhrzeigersinn oder gegen den Uhrzeigersinn gedreht wird und indem die so erhaltene Vektordarstellung um eine gedachte Linie, die durch den Anfangszustand und den Endzustand geht, gespiegelt wird. So geht die Zustandsfolge III aus der Zustandsfolge I beispielsweise durch Drehung des Vektordiagramms um 90° im Uhrzeigersinn hervor. Die Zustandsfolge IV entsteht aus der Zustandsfolge III durch Spiegelung des Vektordiagramms an einer gedachten, durch die Anfangs- und Endzustände 2P, 2N gehenden Linie. Diese Spiegelung des Verktordiagramms bewirkt eine Vertauschung der Reihenfolge der sekundärseitigen Impulse. In dem zuvor genannten Beispiel umfasst das Vektordiagramm III die Zustandsfolge 2P-1N-2N. Sekundärseitig entstehen hierbei nacheinander die Signalmuster S2 und S3. Bei dem Vektordiagramm IV mit der Zustandsfolge 2P-1P-2N entstehen sekundärseitig nacheinander die Spannungsimpulse S3 und S2.

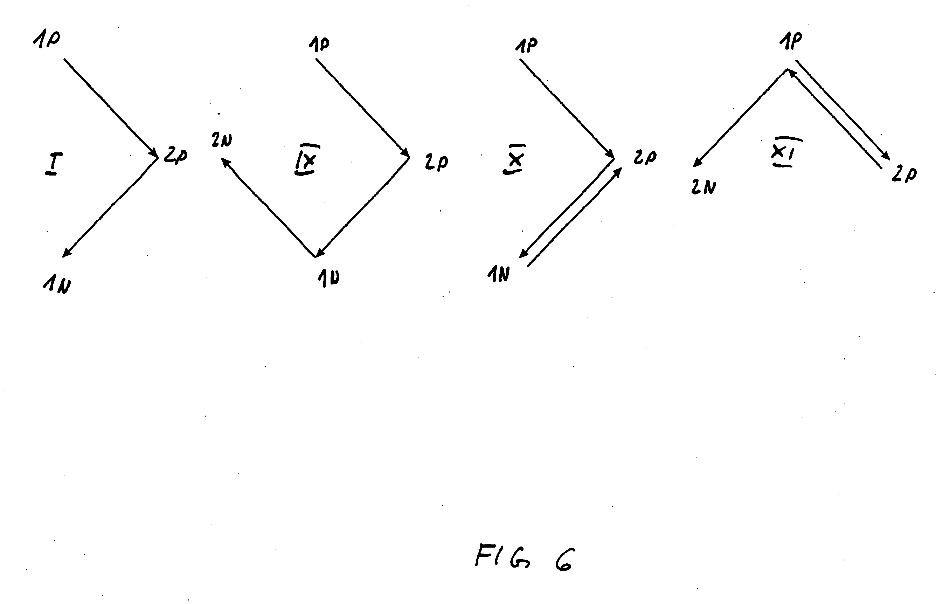

Wie bereits erläutert, lassen sich Zustandsfolgen mit zwei Zustandsübergängen, die zwischen drei unterschiedlichen Aktivierungszuständen verlaufen, eindeutig anhand der sekundärseitigen Signale der Transformatoren 10, 20 unterscheiden. Eine solche Zustandsfolge mit zwei Zustandsübergängen kann in beliebiger Weise um wenigstens einen weiteren Zustandsübergang ergänzt werden, was in Figur 6 durch die Zustandsfolgen IX, X und XI dargestellt ist. Diese Zustandsfolgen XI, X und XI repräsentieren entsprechend der Zustandsfolge I Grundstrukturen für Zustandsübergänge, aus denen sich durch Drehen der Vektordarstellung in 90°-Schritten im Uhrzeigersinn und gegen den Uhrzeigersinn und durch Spiegeln um eine gedachte, diagonal verlaufende Linie jeweils sieben weitere Zustandsfolgen mit jeweils drei Zustandsübergängen ableiten lassen. Insgesamt lassen sich somit 32 Zustandsfolgen mit zwei oder drei Zustandsübergängen unterscheiden, nämlich 8 Zustandsfolgen mit zwei Übergängen und 24 (=3·8) Zustandsfolgen mit jeweils drei Zustandsübergängen. Bei einem Ausführungsbeispiel des erfindungsgemäßen Verfahrens ist somit vorgesehen, Datenfolgen mit jeweils 5 Bit auf eine Sendesignalsequenz mit zwei oder drei Zustandsübergängen umzusetzen, wobei jedem der $2^5 = 32$ unterschiedlichen 5 Bit-Sendefolgen eine der 32 möglichen Signalsequenzen mit jeweils zwei oder drei Zustandsübergängen durch die Modulationsschaltung 40 zugeordnet wird.

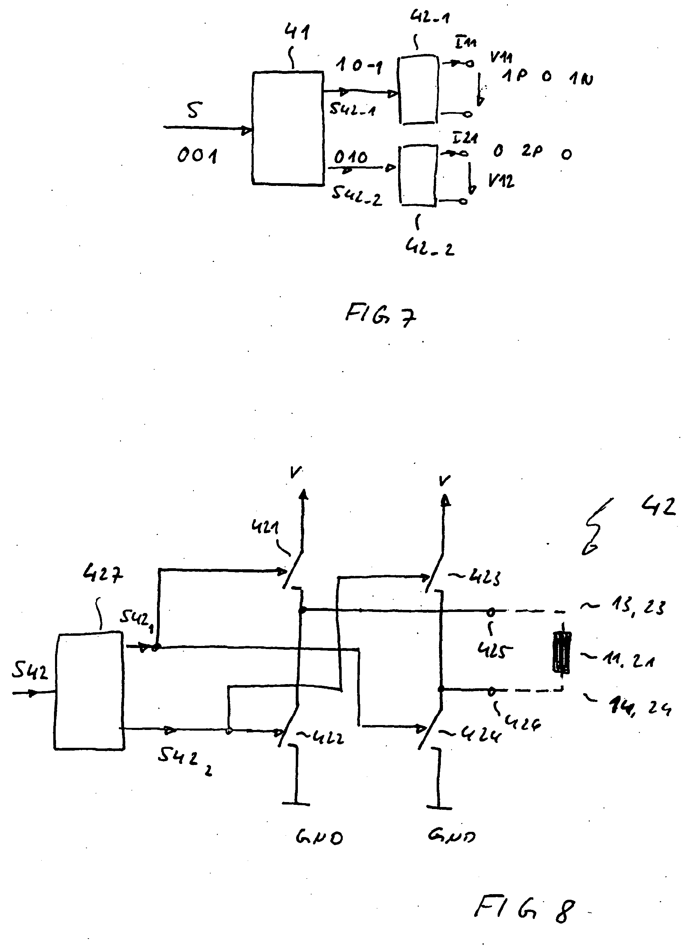

Die Funktionsweise der Modulationsschaltung 40 zur Umsetzung einer Datensequenz N auf Sendesignale V11, V12 wird nachfolgend anhand von Figur 7 für die Übertragung eines 3 Bit-Datenwortes erläutert. Zu Zwecken der Erläuterung sei hier die Übertragung des 3 Bit-Datenworts "001" angenommen, der beispielsweise die Zustandsfolge 1P-2P-1N zugeordnet ist. Die Zuordnungseinheit 41 setzt dieses 3 Bit-Datenwort, in dem Beispiel auf Treibersignale S42_1, S42_2 für die Treiberschaltungen 42_1, 42_2 um. Die durch die Zuordnungseinheit erzeugten Treibersignale S42_1, S42_2 sind hierbei jeweils Signalsequenzen mit drei aufeinanderfolgenden Signalen, von denen jedes drei verschiedene Signalwerte, die in Figur 7 durch 1, 0 und -1 repräsentiert sind, annehmen kann und die so gewählt sind, dass die gewünschte Folge von Zustandsübergängen der beiden Übertrager auftritt. Die Signalwerte 1 und -1 repräsentieren in Figur 7 die beiden Aktivierungszustände des durch die jeweilige Treiberschaltung 42_1, 42_2 angesteuerten Übertragers, während die Signalwerte 0 den Ruhezustand des jeweiligen Übertragers repräsentieren. Eine in Figur 7 dargestellte Signalfolge 1 0 -1 des ersten Treibersignals S42_1 führt somit zu einer Zustandsfolge 1P 0 1N des ersten Übertragers (10 in Figur 1), und eine Signalfolge 0 1 0 des zweiten Treibersignals S42_2 führt zu einer Zustandsfolge 0 2P 0 des zweiten Übertragers (20 in Figur 1). Diese beiden Zustandsfolgen bewirken eine wechselseitige Aktivierung der beiden Übertrager derart, dass die dem Datenwort "001" zugeordnete Folge 1P-2P-1N von Aktivierungszuständen der beiden Übertrager auftritt. Die Zuordnungseinheit 41 kann beispielsweise in Form einer Nachschlagetabelle realisiert sein, in der zu jedem der $2^3=8$ möglichen 3-Bit-Datenworte die zugehörigen Treibersignalfolgen S42_1, S42_2 abgespeichert sind.

Figur 8 zeigt ein Realisierungsbeispiel für die beiden Treiberschaltungen 42_1, 42_2, die jeweils geeignet sind, die beiden Übertrager nach Maßgabe der Treibersignale in den ersten Aktivierungszustand, den zweiten Aktivierungszustand oder den Ruhezustand zu versetzen. Die Treiberschaltung 42 in Figur 8 steht repräsentativ für jeweils eine dieser Treiberschaltungen 42_1, 42_2. Diese Treiberschaltung 42 umfasst eine aus zwei Halbbrückenschaltungen aufgebaute Vollbrückenschaltung mit Ausgängen 425, 426, zwischen die während des Betriebs der Treiberschaltung 42 die Primärwicklung 11, 21 des durch die Treiberschaltung angesteuerten Übertragers geschaltet ist. Die beiden Halbbrückenschaltungen weisen jeweils einen ersten Schalter 421, 423 und einen zweiten Schalter 422, 424 auf, die jeweils in Reihe zwischen eine Klemme für ein positives Versorgungspotential V und ein negatives Versorgungspotential bzw. Bezugspotential GND geschaltet sind. Ein Ausgang der ersten Halbbrücke wird durch einen den Schaltern 421, 422 gemeinsamen Knoten gebildet und bildet den ersten Ausgang 425 der Vollbrücke, während ein Ausgang der zweiten Halbbrückenschaltung durch einen den Schaltern 423, 424 gemeinsamen Knoten gebildet ist, und den zweiten Ausgang 426 der Vollbrücke bildet. Die Treiberschaltung 42 weist eine Ansteuerschaltung 427 für die Schalter 421-424 der Brückenschaltung auf. Dieser Ansteuerschaltung 427 ist das Treibersignal S42, das in Figur 1 für eines der beiden Treibersignale S42_1, S42_2 steht, zugeführt und dient dazu, die Schalter 421-424 abhängig von dem Treibersignal S42 derart anzusteuern, dass sie jeweils einen von drei verschiedenen Ansteuerzuständen annimmt.

Ein erster Ansteuerzustand der Brückenschaltung liegt vor, wenn der erste Schalter 421 der ersten Halbbrücke und der zweite Schalter 424 der zweiten Halbbrücke leitend angesteuert sind, während der erste Schalter 423 der zweiten Halbbrücke und der zweite Schalter 422 der ersten Halbbrücke sperren. Zwischen dem ersten und zweiten Ausgang 425, 426 liegt dann eine positive Spannung an, deren Betrag der Differenz zwischen dem positiven Versorgungspotential V und Bezugspotential GND entspricht. Dieser erste Ansteuerzustand der Treiberschaltung 42 führt zu einem ersten Aktivierungszustand des an die Treiberschaltung angeschlossenen Übertragers. Ein zweiter Ansteuerzustand der Treiberschaltung 42 liegt vor, wenn der erste Schalter 423 der zweiten Halbbrücke und der zweite Schalter 422 der ersten Halbbrücke leiten, während der erste Schalter 421 der ersten Halbbrücke und der zweite Schalter 424 der zweiten Halbbrücke sperren. Zwischen dem ersten und zweiten Ausgang 425, 426 der Brückenschaltung liegt dann eine negative Spannung an, deren Betrag der Differenz zwischen dem positiven Versorgungspotential V und Bezugspotential GND entspricht. Dieser zweite Ansteuerzustand der Treiberschaltung 42 bewirkt den zweiten Aktivierungszustand des an die Treiberschaltung 42 jeweils angeschlossenen Übertragers. Ein dritter Ansteuerzustand der Treiberschaltung 42 liegt dann vor, wenn die ersten Schalter 421, 423 der Brückenschaltung sperren und die zweiten Schalter 422, 424 leiten. Eine Ausgangsspannung der Brückenschaltung ist dann Null, was einem Ruhezustand des jeweils an die Treiberschaltung 42 angeschlossenen Übertragers entspricht. Bei leitenden zweiten Schaltern 422, 424 wird die Flankensteilheit am Ende eines Aktivierungszustandes von der Geschwindigkeit der Schalter bestimmt und nicht durch parasitäre Effekte in der Primärwicklung.

Es sei darauf hingewiesen, dass die einfache Darstellung der Treiberschaltung in Figur 8 unter Verwendung idealer Schalter nur zur Erläuterung der grundsätzlichen Funktionsweise einer geeigneten Treiberschaltung dient. Ein in Figur 2 dargestellter Gesamtstrom Ig, der nach einem Einschwingvorgang für die Dauer der Datenübertragung konstant ist, kann mit einer in Figur 8 dargestellten Treiberschaltung, die mit idealen Schaltern realisiert ist, allerdings nicht erreicht werden. Ein solcher Stromverlauf setzt voraus, dass der nach einem Zustandswechsel exponentiell abklingende Strom des einen Übertragers und der nach diesem Zustandswechsel exponentiell ansteigende Strom komplementär zueinander sind, d.h. in Summe stets einem konstanten über die Versorgungsklemmen aufgenommenen Strom (Ig in Figur 2) entsprechen. Der gerade deaktivierte Übertrager muss hierzu den exponentiell abklingenden Strom über die Versorgungsklemmen aufnehmen. Dies kann durch eine Treiberschaltung erreicht werden, die anstelle der idealen Schalter gemäß Figur 8 Transistoren, insbesondere Bipolartransistoren verwendet, die keine parallel zu deren Laststrecken geschalteten Freilaufdioden aufweisen und bei denen der Freilaufstrom folglich jeweils über einen der mit dem positiven Versorgungspotential V und einen der mit dem Bezugspotential GND verbundenen Transistoren fließt.

Die Ansteuerschaltung 427 erzeugt in dem dargestellten Beispiel aus dem Treibersignal S42, das Bezug nehmend auf Figur 7 drei unterschiedliche Signalwerte annehmen kann, zwei Ansteuersignale S42_1, von denen ein erstes $S42_1$ den ersten Schalter 421 der ersten Halbbrücke und den zweiten Schalter 424 der zweiten Halbbrücke ansteuert und von denen ein zweites $S42_2$ den ersten Schalter 423 der zweiten Halbbrücke und den zweiten Schalter 422 der ersten Halbbrücke ansteuert. Zu Zwecken der Erläuterung sei angenommen, dass die beiden Ansteuersignale $S42_1$, $S42_2$ zweiwertige Signale sind, die jeweils einen High-Pegel und einen Low-Pegel annehmen können, und dass die Schalter 421-424 bei einem High-Pegel des jeweiligen Ansteuersignals leiten und bei einem Low-Pegel des jeweiligen Ansteuersignals sperren. Ein High-Pegel des ersten Ansteuersignals S42_1 führt zu einem ersten Aktivierungszustand des an die Treiberschaltung angeschlossenen Übertragers, während ein High-Pegel des zweiten Ansteuersignals $S42_2$ zu dem zweiten Aktivierungszustand des jeweils angeschlossenen Übertragers führt. Low-Pegel beider Ansteuersignale bewirken den Ruhezustand der jeweils angeschlossenen Übertrager. Bezug nehmend auf das anhand von Figur 7 erläuterte Beispiel setzt die Ansteuerschaltung 427 einen Signalwert "1" des Treibersignals auf einen High-Pegel des ersten Ansteuersignals S42_1, einen Signalwert "-1" des Treibersignals S42 auf einen High-Pegel des Ansteuersignals S42_2 und einen Signalwert "0" auf Low-Pegel beider Ansteuersignale $S42_1$, $S42_2$ um.

In diesem Zusammenhang sei angemerkt, dass die Veranschaulichung der drei unterschiedlichen Signalwerte der Treibersignale S42_1, S42_2 durch 1, 0 und -1 lediglich beispielhaft zu verstehen ist. Selbstverständlich besteht auch die Möglichkeit, die Zuordnungseinheit 41 so zu realisieren, dass diese bereits zweiwertige Treibersignale S42_1, S42_2 zur Verfügung stellt. Ein Treibersignalwert, der zu einem ersten Aktivierungszustand des jeweiligen Übertragers führt, kann beispielsweise einem Binärsignal 10 entsprechen, ein Treibersignalwert, der zu einem zweiten Aktivierungszustand des jeweiligen Übertragers führt, kann einem Binärsignal 01 entsprechen, während ein Treibersignalwert, der zu einem Ruhezustand des jeweiligen Übertragers führt, einem Binärwert 00 entsprechen kann. Das höherwertige Bit (MSB) dieses 2-Bit-Treibersignals kann dann unmittelbar als erstes Ansteuersignal S42_1 in der Treiberschaltung 42 verwendet werden, während das niederwertige Bit (LSB) dieses 2-Bit-Treibersignals unmittelbar als zweiten Ansteuersignal $S42_2$ der Treiberschaltung 42 verwendet werden kann. Auf die Ansteuerschaltung 427 der Treiberschaltung 42 kann dann verzichtet werden.

Selbstverständlich lassen sich mittels des erfindungsgemäßen Verfahrens auch Datenworte mit mehr als 3 Bit Datenlänge übertragen. Bezug nehmend auf die Erläuterungen zu Figur 6 lassen sich bei dem erfindungsgemäßen Verfahren 32 Zustandsfolgen mit jeweils zwei oder drei Zustandsübergängen zwischen Aktivierungszuständen der beiden Übertrager (10, 20 in Figur 1) eindeutig unterscheiden. Eine Signalfolge mit maximal 4 Aktivierungsimpulsen, die abwechselnd an die beiden Übertrager angelegt werden, und die somit maximal drei Zustandsübergänge zwischen Aktivierungszuständen der Übertrager bewirkt, ermöglicht somit die Übertragung eines 5 Bit-Datenwortes. Die bereits anhand von Figur 2 erläuterte Signalfolge ist strichpunktiert durch einen zusätzlichen Ansteuerimpuls, in dem Beispiel einem Ansteuerimpuls, der den Aktivierungszustand 2N des zweiten Übertragers bewirkt, ergänzt, um ein mögliches Übertragungsverfahren für ein 5 Bit-Datenwort zu veranschaulichen.

Werden für die Datenübertragung Signalfolgen zugelassen, die zu zwei, drei oder vier Zustandsübergängen führen, so lassen sich 80 unterschiedliche Datenworte übertragen. Dies ergibt sich aus der Erläuterung zu Figur 6, wonach sich 24 Folgen mit jeweils drei Zustandsübergängen unterscheiden lassen. Da sich an jeden Aktivierungszustand zwei unterschiedliche Aktivierungszustände anschließen können, sind 2·24=48 Zustandsfolgen mit vier Zustandsübergängen unterscheidbar. Die Gesamtzahl unterscheidbarer Zustandsfolgen mit zwei, drei oder vier Zustandsübergängen beträgt dann 8+24+48=80. Selbstverständlich ist dieses Verfahren um eine beliebige Anzahl von Zustandsübergängen erweiterbar, um die Anzahl unterscheidbarer zu übertragender Datenworte noch weiter zu erhöhen.

Zur Rückgewinnung des übertragenen Datensignals S aus den an den Primärwicklungen 12, 22 der Übertrager 10, 20 anliegenden Spannungen V12, V22 weist die Übertragungsstrecke sekundärseitig eine Demodulationsschaltung 50 auf, die aus den sekundärseitigen Spannungen V12, V22 ein Empfangssignal S' erzeugt. Dieses Empfangssignal S' entspricht bei einer fehlerfreien Datenübertragung dem Sendesignal S. Die Demodulationsschaltung 50 weist Bezug nehmend auf Figur 1 zwei Differenzverstärker 51_1, 51_2 auf, die die Sekundärspannungen V12, V22 abgreifen und die jeweils ein von der Sekundärspannung V12, V22 abhängiges Differenzsignal S51_1, S51_2 zur Verfügung stellen. Diese Differenzsignale S51_1, S51_2 sind einem Demodulator 52 zugeführt, der das Empfangssignal S' aus diesen Differenzsignalen S51_1, S51_2 erzeugt.

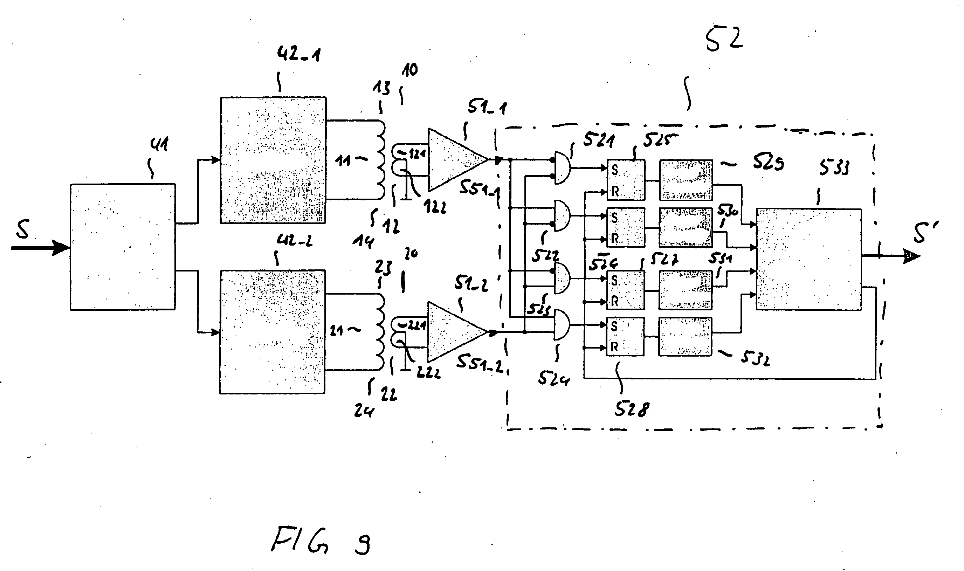

Die Übertrager 10, 20 sind bei dem in Figur 9 dargestellten Ausführungsbeispiel derart realisiert, dass deren Sekundärwicklungen 12, 22 jeweils zwei Teilwicklungen 121, 122 bzw. 221, 222 aufweisen, die jeweils mit einem Anschluss an eine Klemme für ein Bezugspotential angeschlossen sind, wobei die zwei Teilwicklungen 121, 122 bzw. 221, 222 eines Übertragers 10, 20 einen entgegengesetzten Wicklungssinn aufweisen. Die Sekundärspannungen, die zwischen den dem Bezugspotentialanschluss abgewandten Anschlüssen der Teilwicklungen 121, 122 bzw. 221, 222 abgreifbar sind, entsprechen in deren zeitlichen Verlauf grundsätzlich den Sekundärspannungen, die bei Sekundärwicklungen mit nur einer Wicklung auftreten. Der Vorteil eines Übertragers mit einer zweiteiligen Sekundärwicklung gegenüber einem Übertrager mit einer einteiligen Sekundärwicklung besteht im Wesentlichen in dessen höherer Robustheit gegenüber Gleichtaktstörsignalen, also Signalen, die eine gleiche Veränderung des elektrischen Potentials an beiden Anschlüssen der Primärwicklung bewirken.

Bei einer Folge primärseitig hervorgerufener Zustandsübergänge enthalten die an den Differenzverstärkern 51_1, 51_2 abgreifbaren Differenzsignale S51_1, S51_2 eine Folge positiver und negativer Signalimpulse, die von den jeweiligen Sekundärspannungen abhängig sind. Der zeitliche Verlauf der Differenzsignale S51_1, S51_2 entspricht dabei dem zeitlichen Verlauf der Sekundärspannungen, der beispielhaft in Figur 2 dargestellt ist.

Den Differenzverstärkern 51_1, 51_2 sind Logikgatter 521-524 nachgeschaltet, die in dem Beispiel als UND-Gatter mit invertierenden oder nicht-invertierenden Eingängen realisiert sind, denen jeweils die beiden Differenzsignale S51_1, S51_2 zugeführt sind und die dazu dienen, primärseitige Zustandsübergänge anhand der sekundärseitig erzeugten Differenzsignale S51_1, S51_2 zu detektieren, wobei bezugnehmend auf Figur 2 ein primärseitiger Zustandsübergang gleichzeitig oder annähernd gleichzeitig zu positiven oder negativen Spannungsimpulsen an den Sekundärwicklungen und damit zu positiven oder negativen Signalimpulsen der Differenzsignale S51_1, S51_2 führt. Die Logikgatter sind dazu ausgebildet, die vier möglichen Signalkonstellationen zu detektieren, die durch positive und negative Signalimpulse der Differenzsignale S51_1, S51_2 gebildet werden können. Jede dieser Signalkonstellationen entspricht hierbei einem der anhand von Figur 4 veranschaulichten Signalmuster S1-S4. Ein erstes Gatter 521 weist zwei invertierende Eingänge auf und erzeugt einen positiven Signalimpuls an dessen Ausgang, wenn beide Differenzsignale S51_1, S51_2 einen negativen Signalimpuls aufweisen, was dem Signalmuster S2 in Figur 4 entspricht. Ein zweites Gatter 522 dient zur Detektion des Signalmusters S3; diesem Gatter sind das erste Differenzsignal S51_1 unmittelbar und das zweite Differenzsignal S51_2 invertiert zugeführt. Einem dritten Gatter 523 sind das erste Differenzsignal S51_1 invertiert und das zweite Differenzsignal S51_2 unmittelbar zugeführt, und einem vierten Gatter 524 sind die beiden Differenzsignale S51_1, S51_2 unmittelbar zugeführt. Das erste Gatter 521 dient zur Detektion eines Zustandsüberganges, wie er beispielsweise in Figur 2 zum Zeitpunkt t2 dargestellt ist, das zweite Gatter 522 dient zur Detektion eines Zustandsübergangs, wie er in Figur 2 zum Zeitpunkt t3 dargestellt ist, und das dritte Gatter 523 dient zur Detektion eines Zustandsübergangs, wie er in Figur 2 zum Zeitpunkt t1 dargestellt ist. Das vierte Gatter 524 detektiert einen (in Figur 2 nicht dargestellten) Zustandsübergang, bei dem positive Spannungsimpulse an beiden Sekundärwicklungen vorliegen.

Den Gattern 521-524 sind jeweils Speicherelemente in Form von Flip-Flops 525-528 nachgeschaltet, wobei die Ausgänge der Gatter 521-524 jeweils an den Setz-Eingang S eines der Flip-Flops 525-528 angeschlossen sind. Diese Flip-Flops 525-528 dienen zur Speicherung der durch die Gatter 521-524 detektierten Zustandsübergänge. Ein den Flip-Flops 525-528 nachgeschalteter "Rückwandler" 533 ermittelt die zeitliche Reihenfolge, in der die Flip-Flops 525-528 gesetzt werden und ermittelt daraus die primärseitig erzeugte Zustandsfolge. Der Rückwandler 533 führt außerdem eine zu der Operation der Abbildungseinheit 41 (Figur 7) inverse Operation aus und gibt an dessen Ausgang als Ausgangssignal S' das der jeweiligen Zustandsfolge zugeordnete Datenwort aus. Der Rückwandler 533 besitzt außerdem einen Steuerausgang, über den bei Ausgabe eines Datenwortes die Flip-Flops 521-524 für eine erneute Detektion von Zustandsübergängen zurückgesetzt werden.

Optional können zwischen die Flip-Flops 525-528 und den Rückwandler 533 Pegelwandler 529-532 geschaltet sein, die dazu dienen, Pegel der Ausgangssignale der Flip-Flops 525-528 auf geeignete Signalpegel für die Verarbeitung durch den Rückwandler 533 umzusetzen. Da jedes der Flip-Flops 525-528 der Demodulationsschaltung 52 bei Empfang einer Signalsequenz nur einmal gesetzt werden kann, ist die Demodulationsschaltung 52 in der Lage, Signalsequenzen mit maximal vier unterschiedlichen Zustandsübergängen zu detektieren.

Bei einer Ausführungsform, bei der der Rückwandler 533 in der Lage ist, die zeitliche Reihenfolge zu ermitteln, in der die einzelnen Flip Flops 525-528 gesetzt werden, lassen sich 24 ($=4\cdot3\cdot2\cdot1$) Signalsequenzen mit vier unterschiedlichen Zustandsübergängen unterscheiden.

Bei einer Ausführungsform der Demodulationsschaltung 52 ist vorgesehen, dass die Demodulationsschaltung 52 auch Signalsequenzen mit weniger als vier Zustandsübergängen detektieren kann. Der Rückwandler 533 ist hierbei beispielsweise so realisiert, dass er das Setzen der Flip Flops 525-528 nur innerhalb eines vorgegebenen Zeitfensters nach Setzen eines ersten der Flip Flops auswertet und am Ende dieses Zeitfensters das der jeweiligen Zustandsfolge zugeordnete Datenwort ausgibt. Das Zeitfenster ist hierbei auf die maximale Zeitdauer einer primärseitig erzeugten Signalsequenz abzustimmen. Mittels des in Figur 9 dargestellten Demodulators 52 lassen sich 24 ($=4\cdot3\cdot2$) Signalsequenzen mit drei unterschiedlichen Zustandsübergängen, 12 ($=4\cdot3$) Signalsequenzen mit zwei Zustandsübergängen und vier Signalsequenzen mit nur einem Zustandsübergang unterscheiden. Insgesamt kann der Demodulator 52 somit 64 ($=24+24+12+4$) Signalsequenzen mit maximal vier unterschiedlichen Zustandsübergängen unterscheiden, wobei Zustandsübergänge mit nur einem, nur zwei oder nur drei Übergängen eine Teilmenge dieser 64 Übergänge sind. Diese 64 möglichen Zustandsübergänge ermöglichen eine Übertragung von Datenworten mit 6 ($=\log_2 64$) Bit.

Bei einer weiteren Ausführungsform der Demodulationsschaltung 52 ist der Rückwandler 533 dazu ausgebildet, lediglich diejenigen Flip Flops 525-528 zu detektieren, die innerhalb eines vorgegebenen Zeitfensters gesetzt werden, ohne jedoch die Reihenfolge, in der die Flip Flops gesetzt werden, unterscheiden zu können. Bezeichnet man die unterschiedlichen Konstellationen, in denen die Flip Flops 525-528 der Demodulationsschaltung 52 gesetzt sein können, als Demodulatorzustände, so gibt es vier unterschiedliche Demodulatorzustände mit nur einem gesetzten Flip Flop, sechs unterscheidbare Demodulatorzustände mit zwei gesetzten Flip Flops, vier Demodulatorzustände mit drei gesetzten Flip Flops und einen Demodulatorzustand mit vier gesetzten Flip Flops, so dass durch eine solche Demodulationsschaltung lediglich 15 unterschiedliche Demodulatorzustände unterscheidbar sind.

Das zuvor erläuterte Datenübertragungsverfahren, bei dem Datenworte auf Signalsequenzen umgesetzt werden, die jeweils Zustandsübergänge von Signalübertragern repräsentieren, ist selbstsynchronisierend, das heißt parallel zu den Signalsequenzen muss kein separates Taktsignal übertragen werden. Zwischen den einzelnen Signalsequenzen ist lediglich eine ausreichende Pause einzuhalten, durch die sichergestellt ist, dass empfängerseitig eine ausreichende Trennung zweier aufeinanderfolgend übertragener Signalsequenzen möglich ist.

Das erläuterte Übertragungsverfahren eignet sich insbesondere zur Datenübertragung über auf einem Halbleiterchip integrierte Luftspulenübertrager. Sekundärseitige Impulse solcher Übertrager dauern nur ca. 1ns, die Dauer der einzelnen Aktivierungszustände kann beispielsweise so eingestellt werden, dass sie im Bereich von nur etwa 4ns liegt. Der Abstand zwischen den einzelnen Signalsequenzen, die jeweils ein Datenwort repräsentieren liegt beispielsweise bei etwa 100ns. Das Verfahren ermöglicht somit eine selbstsynchronisierende Übertragung bei einer hohen Datenrate.

Für die bisherige Erläuterung wurde davon ausgegangen, dass zur Datenübertragung zwei Übertrager zur Verfügung stehen, die jeweils abwechselnd aktiviert werden. Selbstverständlich besteht auch die Möglichkeit, mehr als zwei Übertrager für die Datenübertragung einzusetzen, die abwechselnd derart aktiviert werden, dass sich jeweils einer der Übertrager in einem aktivierten Zustand befindet.

Wie bereits zuvor erläutert, kann die Sendesignalfolge S eine Datenfolge, die ausschließlich aus Nutzdaten besteht, oder eine kodierte Datenfolge, die durch eine Kodierung aus einer Nutzdatenfolge gebildet ist, sein. Ein für das erläuterte Übertragungsverfahren besonders geeignetes Kodierverfahren zur Erzeugung einer Sendesignalfolge S aus einer Nutzdatenfolge wird nachfolgend erläutert.

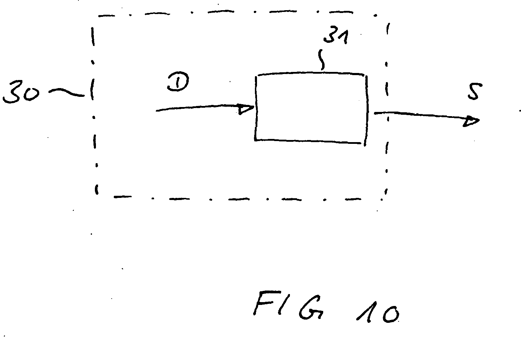

Bezugnehmend auf Figur 10 ist zur Bereitstellung der kodierten Sendesignalfolge S aus einer unkodierten Datenfolge D, die nachfolgend als Nutzdatenfolge bezeichnet ist, ein Kodierer 31 vorhanden, dem die Nutzdatenfolge D zugeführt ist, und der die kodierte Datenfolge S zur Verfügung stellt. Dieser Kodierer 31 kann beispielsweise Bestandteil der Datenquelle 30 sein, wobei die Datenfolge D in beliebiger Weise in der Datenquelle 30 gespeichert oder dieser Datenquelle zugeführt sein kann. Der Kodierer 31 kann mehrere Zustände annehmen, die nachfolgend als "Kodiererzustände" bezeichnet werden, und bewirkt eine zustandsabhängige Kodierung der Nutzdatenfolge D, das heißt, die kodierte Signalfolge S ist sowohl von der Nutzdatenfolge D als auch von einem momentanen Kodiererzustand des Kodierers 31 abhängig. Die kodierte Signalfolge S ist also eine Funktion f der Nutzdatenfolge D und des momentanen Kodiererzustandes Z, was wie folgt dargestellt werden kann:

$$S = f(D, Z) \qquad\qquad (1)$$

Für die nachfolgende Erläuterung sei angenommen, dass der Kodierer 31 acht Kodiererzustände annehmen kann, die mit 0 bis 7, bzw. in binärer Schreibweise mit 000 bis 111 durchnummeriert sind.

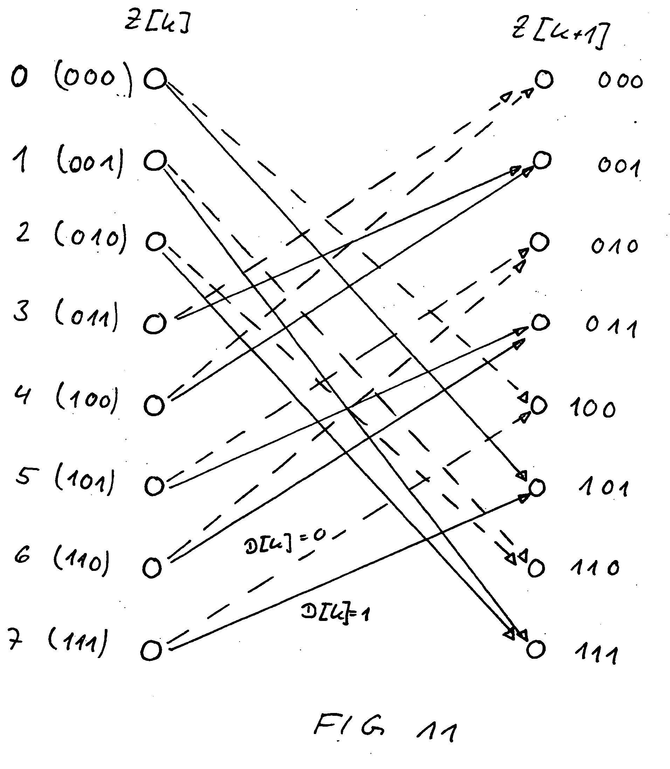

Der Kodierer 31 ändert seinen Momentanzustand abhängig von der Datenfolge D. Figur 11 zeigt beispielhaft ein Trellisdiagramm für diesen Kodierer 31, in dem die Zustandsübergänge dieses Kodierers 31 abhängig von der Datenfolge D dargestellt sind. Mit $Z[k]$ und $Z[k+1]$ sind in Figur 11 aufeinanderfolgende Kodiererzustände bezeichnet. Die mit durchgezogenen Linien und gestrichelten Linien dargestellten Pfeile in Figur 11 veranschaulichen mögliche Zustandsübergänge des Kodierers abhängig von der Datenfolge D. Mit $D[k]$ ist in Figur 11 ein Datenbit bezeichnet, das den jeweiligen Zustandsübergang herbeiführt. Gestrichelte Linien in Figur 11 symbolisieren hierbei Zustandsübergänge, die durch ein Datenbit $D[k]=0$ hervorgerufen sind, während durchgezogene Pfeile solche Zustandsübergänge symbolisieren, die durch ein Datenbit $D[k]=1$ hervorgerufen sind. Befindet sich der Kodierer 31 beispielsweise im Zustand $Z[k\}=0$, so geht er bei Eingang eines Datenbits $D[k]=0$ ein in den Zustand $Z[k+1]=4$ über, während er bei einem Datenbit $D[k]=1$ in den Zustand $Z[k+1]=5$ übergeht.

Die Zustandsübergänge des Kodierers sind eindeutig, das heißt ausgehend von einem Momentanzustand des Kodierers sind nur zwei Zustandsübergänge, ein Zustandsübergang für $D[k]=0$ und ein Zustandübergang für $D[k]=1$ möglich. Jeder Zustand besitzt zwei Vorgängerzustände, beispielsweise der Zustand $Z[k+1]=0$ die Vorgängerzustände $Z[k]=3$ und $Z[k\}=4$. Diese Vorgängerzustände sind so gewählt sind, dass die Zustandsübergänge von diesen Vorgängerzuständen durch gleiche Datenbits hervorgerufen wird. Für den Zustand $Z[k+1]=0$, zum Beispiel, erfolgen die Zustandsübergänge von den Vorgängerzuständen $Z[k]=3$ und $Z[k\}=4$ durch das Datenbit $D[k]=0$.

Der Kodierer 31 ist dazu ausgebildet, zu jedem Datenbit $D[k]$ der Datenfolge D ein Datenwort mit einer Wortbreite von mehr als 1 Bit zu erzeugen, das von dem Datenbit $D[k]$ und dem jeweiligen Momentanzustand $Z[k]$ des Kodierers abhängig ist. Dieses Datenwort ist bei einem Kodierer mit acht (=$2^3$) möglichen Kodiererzuständen, beispielsweise ein Drei-Bit-Datenwort. Jeder der gemäß dem Trellisdiagramm möglichen Kombinationen aus Momentanzustand $Z[k]$ und Datenbit $D[k]$, die zu einem Folgezustand $Z[k+1]$ führen, ist hierbei ein eindeutiges Datenwort zugeordnet. Das durch den Kodierer 31 für jedes Datenbit $D[k]$ der Datenfolge D ausgegebene Datenwort entspricht beispielsweise einem dem jeweiligen Folgezustand $Z[k+1]$ zugeordneten Datenwort. Für die weitere Erläuterung sei angenommen, dass die Zustände von 000 bis 111 nummeriert sind und dass das einem Zustand $Z[k+1]$ zugeordnete Datenwort der jeweiligen Nummer des Zustandes entspricht. Die Nummerierung erfolgt hierbei so, dass Zustände, die aus einem Datenbit $D[k]=0$ resultieren eine geradzahlige Nummer und Zustände, die aus einem Datenbit $D[k]=1$ resultieren eine ungeradzahlige Nummer haben. Das Datenbit, der Datenfolge D ist dann als niederwertigstes Bit (LSB) in dem durch den Kodierer 31 erzeugten Drei-Bit-Datenwort enthalten ist.

Das Sendesignal S, das eine Folge von Datenworten enthält, die durch den Kodierer 31 abhängig von dem Datensignal D ausgegeben werden kann ein Ein-Bit-Signal sein, in dem die einzelnen Bits der Datenworte seriell aufeinanderfolgen. Das Datensignal kann alternativ ein Datensignal der Breite 3 sein, in dem die Datenbits der einzelnen Datenworte parallel übertragen werden.

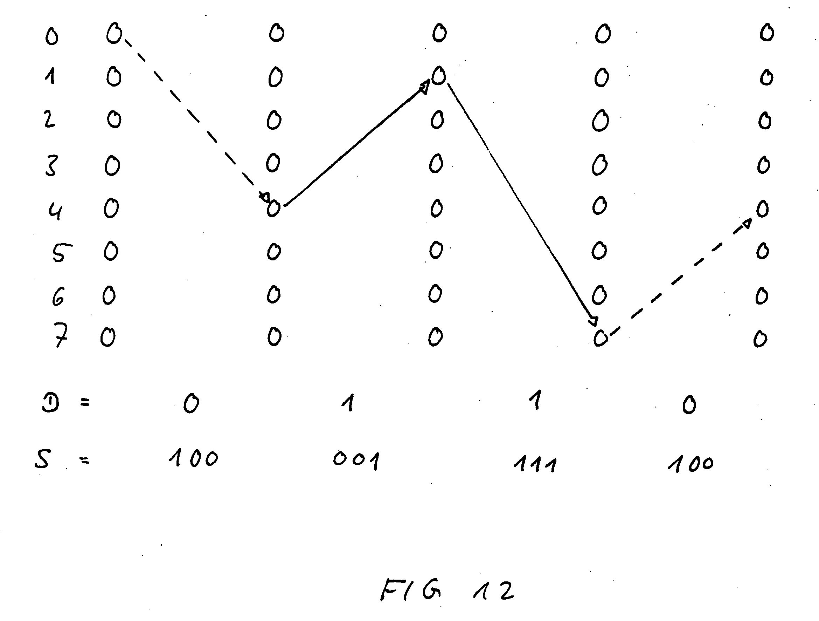

Die Erzeugung des Sendesignalfolge S aus der Datenfolge D anhand eines Kodierers mit acht Kodierungszuständen und mit einem in dem Trellisdiagramm gemäß Figur 11 dargestellten Kodierungsverhalten wird nachfolgend anhand von Figur 12 erläutert. Für die Erläuterung sei angenommen, dass sich der Kodierer in einem Ausgangszustand $Z=0$ befindet. Die Datenfolge D umfasst beispielhaft die Folge der Datenbits 0, 1, 0. Unter Berücksichtigung des Trellisdiagramms gemäß Figur 11 bewirkt diese Datenfolge ausgehend von dem Anfangszustand $Z=0$ in dem Kodierer 31 eine Zustandsfolge 4-1-7-4, was der kodierten Signalfolge 100, 001, 111, 100 entspricht.

Bezugnehmend auf Figur 1 setzt die Abbildungseinheit 41 dieses Sendesignal S auf Treibersignale S42_1, S42_2 um, die zu Aktivierungszuständen der Übertrager 10, 20 führen. Bei Anwendung des erläuterten Kodierungsverfahrens ist hierbei vorgesehen, die drei Datenbits eines Datenwortes des kodierten Signals S, die aus einem Datenbit des Datensignals D resultieren, auf eine Folge von Zustandsübergängen der Übertrager 10, 20 umzusetzen und die aus diesen Zustandsübergängen resultierenden, über die Übertrager 10, 20 übertragenen Signalssequenzen zeitlich beabstandet zueinander zu übertragen. Bezugnehmend auf die vorherigen Ausführungen sind zur Übertragen eines Drei-Bit-Datenwortes unter Verwendung von zwei Übertragern zwei Zustandsübergänge der beiden Übertrager erforderlich.

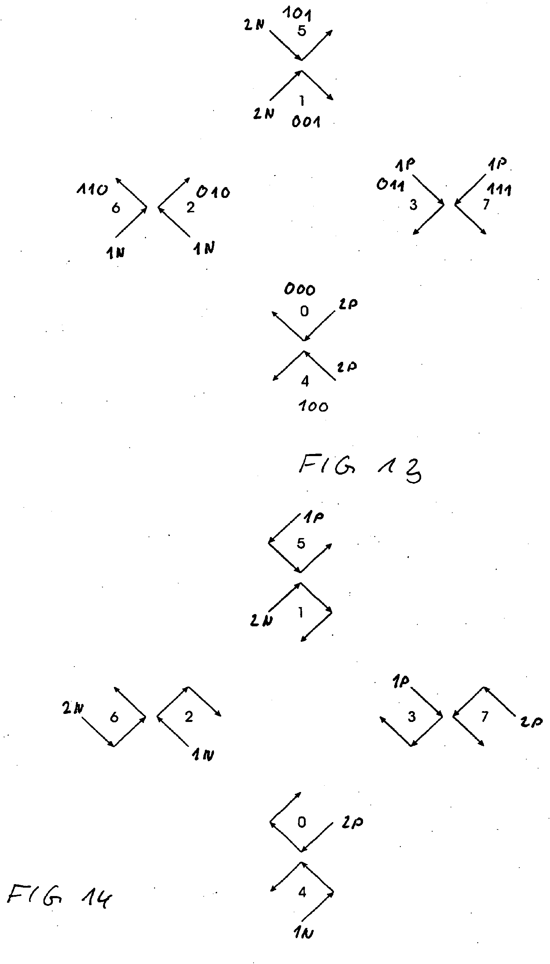

Figur 13 veranschaulicht beispielhaft die Abbildung der acht möglichen Drei-Bit-Datenworte auf Zustandsfolgen mit jeweils zwei Zustandsübergängen, wobei diese Zustandsübergänge in Form der bereits zuvor erläuterten Übergangsvektoren dargestellt sind. So ist beispielsweise dem Datenwort 101 die Zustandsfolge 2N-1N-2P zugeordnet. Um eine hohe Störsicherheit bei der Datenübertragung zu erreichen, ist die Zuordnung der Drei-Bit-Datenworte zu den Zustandsfolgen der Übertrager derart gewählt, dass Datenworte, die ausgehend von einem Kodiererzustand die beiden einzig gültigen Datenworte darstellen, entgegengesetzte Übergangsvektoren besitzen. Dies wird anhand eines Beispiels verdeutlicht:

Ausgehend beispielsweise von dem Kodierungszustand Z=4 sind abhängig von dem Datenbit der Datenfolge D die nachfolgenden Kodiererzustände Z=0 oder Z=1 zulässig, denen die Datenworte 000 bzw. 001 zugeordnet sind. Die diesen Datenworten zugeordneten Zustandsfolgen 2P-1N-2N (für 000) und 2N-1P-2P (für 001) besitzen für beide Zustandsübergänge jeweils entgegengesetzte Übergangsvektoren, was bezugnehmend auf Figur 4 gleichbedeutend damit ist, dass die sekundärseitig an den Übertragern 10, 20 auftretenden Signalimpulse für diese Datenworte (000 und 001 in dem Beispiel) komplementär zueinander sind. Während für die Zustandsfolge 2P-1N-2N des Datenworts 000 zwei negative Signalimpulse und nachfolgend ein positiver Signalimpuls an dem ersten Übertrager und ein negativer Signalimpuls an dem zweiten Übertrager entstehen, sind bei der Signalfolge 2N-1P-2P entgegensetzte sekundärseitige Signale vorhanden, das heißt zwei positive Impulse an beiden Übertragern gefolgt von einem negativen Impuls an dem ersten Übertrager und einem positiven Impuls an dem zweiten Übertrager. Dieser Zuordnung der Datenworte zu den Zustandsfolgen und damit zu den über die Übertrager 10, 20 übertragenen Signalsequenzen liegt der Gedanke zugrunde, einen "Signalabstand" zwischen zwei gültigen übertragenen Datenworten möglichst groß und das Verfahren damit möglichst robust gegenüber Störungen zu machen.

Die Zuordnung der Datenworte zu den Zustandsfolgen der Übertrager erfolgt außerdem derart, dass Datenworten, die sich im höchstwertigen Bit (MSB) unterscheiden, Zustandsfolgen zugeordnet die gleiche Übergangsvektoren besitzen, jedoch in einer vertauschten Reihenfolge. Dies ist gleichbedeutend damit, dass die aus den beiden Datenworten resultierenden sekundärseitigen Signalsequenzen gleiche Signalmuster, jedoch in einer vertauschten Reihenfolge besitzen. So ist beispielsweise dem Datenwort 011 die Zustandsfolge 1P-2P-1N zugeordnet, die bezugnehmend auf Figur 4 sekundärseitig zu der Signalmusterfolge S1-S2 führt, während dem Datenwort 111 die Zustandsfolge 1P-2N-1N zugeordnet ist, die sekundärseitig zu der Signalmusterfolge S2-S1 führt. Ein fehlerhaftes Vertauschen der Übergangsvektoren bei der Übertragung führt, da dass LSB des Datenwortes nicht verändert wird, zu einer richtigen Rekonstruktion der Datenfolge aus dem empfängerseitig empfangenen Datenwort.

Zur weiteren Erhöhung der Störsicherheit besteht bezugnehmend auf Figur 14 auch die Möglichkeit, jedem der Drei-Bit-Datenworte eine Zustandsfolge mit drei Zustandsübergängen zuzuordnen, wobei aufeinanderfolgende Zustandsübergänge jeweils orthogonale Übergangsvektoren besitzen. Die Zuordnung dieser Zustandsübergänge zu den Datenworten erfolgt auch hierbei so, dass den ausgehend von einem Anfangszustand gültigen zwei Datenworten Zustandsübergänge zugeordnet sind, bei denen die einzelnen Zustände in entgegengesetzter Reihenfolge durchlaufen werden. Datenworten, die sich im MSB unterscheiden sind die Zustandsfolgen so zugeordnet, dass die Reihenfolge des ersten Zustandsübergangs und des dritten Zustandsübergangs der drei Zustandsübergänge vertauscht sind.

Die in dem Trellisdiagramm gemäß Figur 11 dargestellten Zustandsübergänge des Kodierers und die aus diesen Zustandsübergängen resultierenden Datenworte sind so gewählt, dass die Differenz aufeinanderfolgender Datenworte nur drei unterschiedliche Werte annehmen kann und zwar abhängig davon, ob die zwei aufeinanderfolgenden Datenworte jeweils geradzahlig oder jeweils ungeradzahlig sind oder ob ein geradzahliges Datenwort auf ein ungeradzahliges oder ein ungeradzahliges Datenwort auf ein geradzahliges folgt. Davon ausgehend, dass die ausgegebenen Datenworte den Zustandsnummerierungen Z entsprechen, gilt für eine Kodierung gemäß Figur 11:

$$Z[k+1]-Z[k] = 4 \text{ für } Z[k+1] \text{ gerade} \quad \text{und } Z[k] \text{ gerade} \quad (2a)$$

$$Z[k+1]-Z[k] = 5 \text{ für } Z[k+1] \text{ ungerade und } Z[k] \text{ gerade} \quad (2b)$$

$$Z[k+1]-Z[k] = 5 \text{ für } Z[k+1] \text{ gerade} \quad \text{und } Z[k] \text{ ungerade} \quad (2c)$$

$$Z[k+1]-Z[k] = 6 \text{ für } Z[k+1] \text{ ungerade und } Z[k] \text{ ungerade (2d)}$$

Eine Auswertung der Differenz der sekundärseitig empfangenen Datenworte unter Berücksichtigung der Geradzahligkeit bzw. Ungeradzahligkeit der empfangenen Datenworte ermöglicht bei diesem Verfahren somit eine Detektion von Übertragungsfehlern.

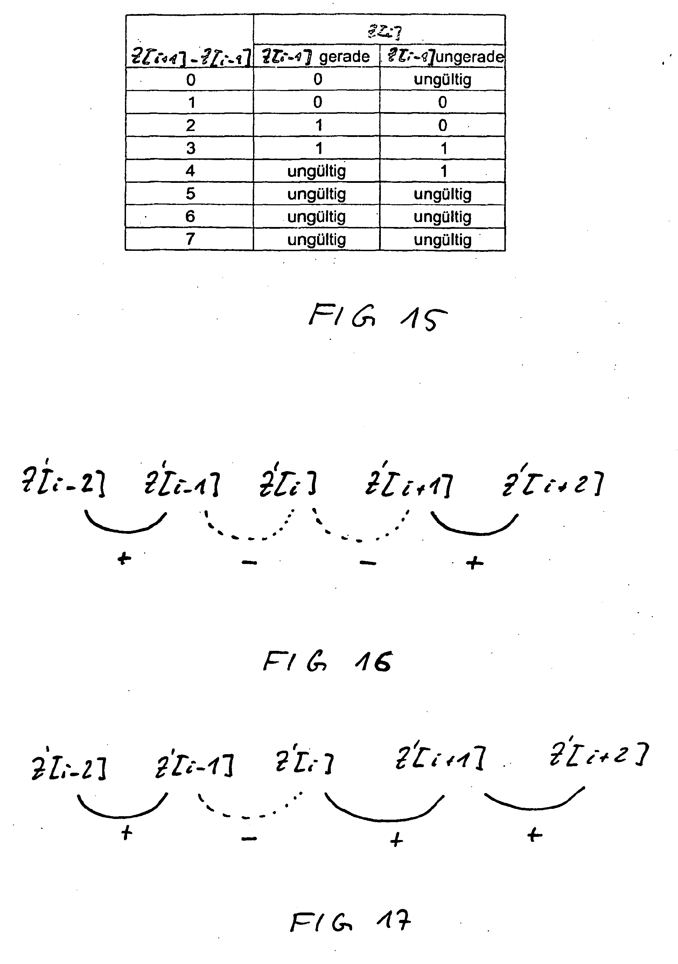

Das anhand von Figur 11 erläuterte Kodierungsverfahren ermöglicht darüber hinaus auch verschiedene Fehlerkorrekturen, wenn anhand der Differenz zweier aufeinanderfolgender Datenworte ein Fehler detektiert wird. Die Korrektur eines zwischen zwei Datenworten liegenden fehlerhaften Datenwortes ist bei diesem Verfahren dann möglich, wenn die Differenz dieser zwei Datenworte einer anhand von Figur 15 erläuterten Bedingung genügt. Das Trellisdiagram gemäß Figur 11 ist so gewählt, dass anhand der Differenz zweier Datenworte, von denen eines unmittelbar vor dem fehlerhaften Datenwort liegt und von denen ein anderes unmittelbar nach dem fehlerhaften Datenwort liegt, auf den korrekten Wert des durch das fehlerhafte Datenwort übertragenen Datenbits geschlossen werden kann. Für die nachfolgende Erläuterung sei angenommen, dass Z[i] ein fehlerhaftes Datenwort darstellt, dass Z[i-1] ein unmittelbar vor dem fehlerhaften Datenwort übertragenes Datenwort und Z[i+1] ein unmittelbar nach dem fehlerhaften Datenwort übertragenes Datenwort darstellt. Bezugnehmend auf die in Figur 15 dargestellte Tabelle kann das durch das fehlerhafte Datenwort Z[i] übertragene Datenbit dann rekonstruiert werden, wenn die Differenz Z[i+1]-Z[i-1] der vor und nach dem fehlerhaften Datenwort übertragenen Datenworte 1, 2 oder 3 beträgt. Für ein geradzahliges Datenwort Z[i-1] sind die korrekten Datenbits in der Tabelle in Figur 15 in der mittleren Spalte dargestellt, für ein ungeradzahliges Datenwort Z[i-1] sind für diese Differenzen die korrekten Datenbits in der rechten Spalte dargestellt. Bei Differenzen Z[i+1]-Z[i-1] von 5, 6 oder 7 ist keine unmittelbare Fehlerkorrektur möglich. Diese Differenzen sind sowohl für ein geradzahliges als auch für ein ungeradzahliges Datenwort Z[i-1] nicht gültig, so dass davon auszugehen ist, dass aufeinanderfolgend mehrere fehlerhafte Datenbits übertragen werden.

Bei einer Differenz Z[i+1]-Z[i-1] von 0 ist eine Konstruktion des durch das fehlerhafte Datenbit Z[i] übertragene Datenbit nur für ein geradzahliges Datenwort Z[i-1] möglich, während für eine Differenz Z[i+1]-Z[i-1] von 4 eine Rekonstruktion des durch das fehlerhafte Datenwort Z[i] übertragene Datenbit nur für ein ungeradzahliges Datenwort Z[i-1] möglich ist.

Verschiedene Fehlerszenarien und deren Fehlerkorrektur werden nachfolgend anhand der Figuren 16 bis 18 erläutert. Figur 16 veranschaulicht eine Folge aufeinanderfolgender Datenworte Z'[i-2] ... Z'[i+2], die sekundärseitig nach der Demodulation und noch vor der Dekodierung vorliegen. Es sei angenommen, dass anhand der Gleichungen (2a) - (2d) eine fehlerhafte Differenz zwischen einem Datenwort Z'[i] und dem vorigen Datenwort Z'[i-1] sowie zwischen dem nachfolgenden Datenwort Z'[i+1] und dem Datenwort Z'[i] ermittelt wird. Diese fehlerhaften Differenzen sind in Figur 16 durch gestrichelte Linien und ein Minuszeichen veranschaulicht, während korrekte Differenzen durch durchgezogene Linien zwischen zwei aufeinanderfolgenden Datenworten und ein Pluszeichen veranschaulicht sind. Bei einer solchen Fehlerkonstellation wird angenommen, dass das Datenwort Z'[i] fehlerhaft ist, und die Differenz zwischen den nach diesem Datenwort und vor diesem Datenwort empfangenen Datenworten Z'[i+1], Z'[i-1] wird ermittelt. Ist diese Differenz unter Berücksichtigung der anhand von Figur 15 erläuterten Tabelle gültig, so wird das durch das fehlerhafte Datenwort Z'[i] übertragene Datenbit entsprechend dieser Tabelle korrigiert.

Figur 17 veranschaulicht eine Fehlerkonstellation, bei der in einer Folge empfangener Datenworte anhand der Fehlerdetektionskriterien gemäß (2a) - (2d) nur eine Differenz, in dem dargestellten Beispiel die Differenz zwischen Z'[i] und Z'[i-1], als fehlerhaft erkannt wird. Für die Fehlerkorrektur wird zunächst angenommen, dass von den beiden Datenworten, deren Differenz ungültig ist, das später empfangene Datenwort, im vorliegenden Fall Z'[i] fehlerhaft ist. Anhand der Differenz der benachbarten Datenworte, in dem Beispiel Z'[i+1], Z'[i-1] und der Tabelle in Figur 15 wird dann versucht, diesen Fehler zu korrigieren. Sollte sich die Differenz der benachbarten Datenworte unter Berücksichtigung der Tabelle in Figur 15 als ungültig herausstellen, wird in einem nächsten Schritt angenommen, dass das zuerst übertragene der beiden Datenworte, die eine fehlerhafte Differenz liefern, fehlerhaft ist. Es wird dann versucht, das durch dieses als fehlerhaft angenommene Datenwort übertragene Datenbit anhand der Differenz der vor und nach diesem Datenwort übertragenen Datenworte, im vorliegenden Fall anhand der Datenworte Z'[i] und Z'[i-2] zu korrigieren.

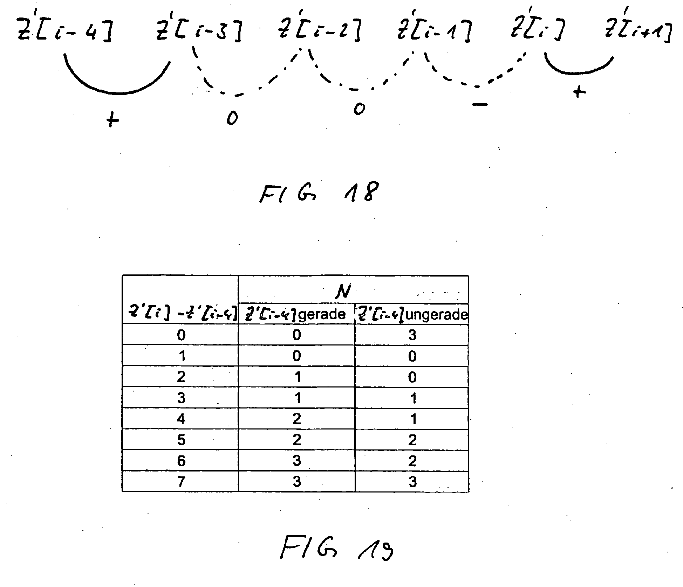

Die anhand des Trellisdiagramms in Figur 11 erläuterte Kodierung ermöglicht eine weitere Fehlerkorrektur, die nachfolgend anhand der Figuren 18 und 19 erläutert wird. Figur 18 veranschaulicht eine Folge aufeinanderfolgend übertragener Datenworte mit einem Datenblock von vier aufeinanderfolgenden Datenworten Z'[i-3] ... Z'[i], innerhalb dem anhand der Beziehungen (2a) - (2d) ein oder mehr Fehler detektiert werden. Die Differenz zwischen dem ersten Datenwort, in dem Beispiel Z'[i-3] dieses Datenblockes und dem vorherigen Datenwort Z'[i-4] ist hierbei korrekt, gleiches gilt für die Differenz zwischen dem dem letzten Datenwort Z'[i] des Datenwortes nachfolgenden Datenwort Z'[i+1] und dem letzten Datenwort Z'[i]. Die Differenz zwischen dem letzten Datenwort Z'[i] und dem vorletzten Datenwort Z'[i-1] des Datenblocks wird als ungültig angenommen, die beiden anderen Differenzen innerhalb dieses Datenblockes können gültig oder ungültig sein, was in Figur 18 durch strichpunktierte Linien und Kreise symbolisiert ist.

Bei einer solchen Konstellation, bei der innerhalb eines Datenblockes mit vier Datenworten wenigstens eine Differenz ungültig ist, lässt sich - sofern keine Korrektur anhand des in den Figuren 14 bis 17 erläuterten Verfahrens möglich ist - zumindest ermitteln, wie viele Datenbits mit einem bestimmten Wert durch die drei ersten Datenworte Z'[i-3]...Z'[i-1] des Datenblocks übertragen werden. Hierzu wird die Differenz zwischen dem letzten Datenwort Z'[i] des Datenblocks und dem vor diesem Datenblock übertragenen Datenwort Z'[i-4] ermittelt. Diese Differenzwerte, die zwischen 0 und 7 liegen können, sind in der linken Spalte einer in Figur 19 dargestellten Tabelle aufgetragen. Abhängig von dem Wert dieser Differenz und abhängig davon, ob das vor dem Datenblock übertragene bzw. empfangene Datenwort Z'[i-4] gerade oder ungerade ist, lässt sich ermitteln, wie viele Datenbits mit D[k] = 1 im fehlerfreien Fall durch die ersten drei Datenworte Z'[i-1]... Z'[i-3] des Datenblocks übertragen werden. N in Figur 19 bezeichnet hierbei die Anzahl dieser Datenbits D[k] = 1.

## Patentansprüche

1. Datenübertragungsverfahren zur Übertragung einer Datenfolge über eine Potentialbarriere mit folgenden Verfahrensschritten.

   - Bereitstellen eines ersten Übertragers (10) mit einer Primärwicklung (11) und einer Sekundärwicklung (12), der einen Ruhezustand und einen ersten und einen zweiten Aktivierungszustand annehmen kann,
   - Bereitstellen eines zweiten Übertragers (20) mit einer Primärwicklung (21) und einer Sekundärwicklung (22), der einen Ruhezustand und einen ersten und einen zweiten Aktivierungszustand annehmen kann, gekennzeichet durch
   - Umsetzen der Datenfolge derart auf die Aktivierungszustände des ersten und zweiten Übertragers (10, 20), dass der erste und zweite Übertrager (10, 20) abwechselnd für eine Aktivierungsdauer einen Aktivierungszustand annehmen, wobei eine Folge von Zustandsübergängen, die jeweils eine Deaktivierung eines Übertragers und eine Aktivierung des anderen Übertragers umfassen, von der Datenfolge abhängig ist.

2. Datenübertragungsverfahren nach Anspruch 1, bei dem die Umsetzung der Datenfolge auf die Aktivierungszustände derart erfolgt, dass wenigstens drei unterschiedliche Aktivierungszustände auftreten.

3. Datenübertragungsverfahren nach Anspruch 1 oder 2, bei dem die Primärwicklungen des ersten und zweiten Übertragers jeweils einen ersten und einen zweiten Anschluss aufweisen und bei dem ein Aktivierungszustand eines Übertragers durch Anlegen eines Spannungspotentials an einen der Anschlüsse der Primärwicklung erreicht wird.

4. Datenübertragungsverfahren nach einem der vorangehenden Ansprüche, bei dem ein Übergang der Übertrager von einem Aktivierungszustand in den Ruhezustand und von dem Ruhezustand in einen Aktivierungszustand innerhalb einer Übergangsdauer erfolgt, wobei eine erste Übergangsdauer bei der Aktivierung des zuerst aktivierten Übertragers für die Übertragung der Datenfolge so gewählt ist, dass sie länger ist als die Übergangsdauer bei einem Zustandsübergang.

5. Datenübertragungsverfahren nach Anspruch 4, bei dem eine letzte Übergangsdauer bei der Deaktivierung des zuletzt aktivierten Übertragers länger ist als die Übergangsdauer bei einem Zustandsübergang.

6. Datenübertragungsverfahren nach einem der vorangehenden Ansprüche, bei dem die Primärwicklungen jeweils eine Zeitkonstante aufweisen und bei dem die Aktivierungsdauern jeweils größer sind als diese Zeitkonstanten.

7. Datenübertragungsverfahren nach Anspruch 6, bei dem die Aktivierungsdauern das 1,5-fache bis 2,5-fache der Zeitkonstanten betragen.

8. Datenübertragungsverfahren nach Anspruch 4, bei dem die erste Übergangsdauer länger ist als die Zeitkonstanten.

9. Datenübertragungsverfahren nach Anspruch 5, bei dem die letzte Übergangsdauer länger ist als die Zeitkonstanten.

10. Datenübertragungsverfahren nach einem der vorangehenden Ansprüche, bei dem die Übertrager Luftspulenübertrager sind.

11. Datenübertragungsverfahren nach einem der vorangehenden Ansprüche, bei dem mehrere Sendesequenzen, die jeweils durch Pausen getrennt sind, erzeugt werden.

**12.** Datenübertragungsverfahren nach Anspruch 11, bei dem eine Sendesequenz maximal vier Zustandsübergänge umfasst.

**13.** Datenübertragungsverfahren nach Anspruch 12, bei dem eine Sendesequenz jeden möglichen Zustandsübergang nur maximal einmal aufweist.

**14.** Datenübertragungsverfahren nach einem der vorangehenden Ansprüche, bei dem Sekundärspannungen der Übertrager (10, 20) ausgewertet werden, um Zustandsübergänge des ersten und zweiten Übertragers (10, 20) zu detektieren.

**15.** Datenübertragungsverfahren nach Anspruch 14, bei dem die während einer Sendesequenz sekundärseitig detektierten Zustandsübergänge gespeichert werden und nach Ende der Sendesequenz ausgewertet werden.

**16.** Datenübertragungsverfahren nach Anspruch 15, bei der die Reihenfolge der Zustandsübergänge ausgewertet wird.

**Claims**

**1.** Data transmission method for transmitting a data string over a potential barrier, having the following method steps:

   - a first transformer (10) having a primary winding (11) and a secondary winding (12) is provided which can assume a quiescent state and a first and a second activation state,
   - a second transformer (20) having a primary winding (21) and a secondary winding (22) is provided which can assume a quiescent state and a first and a second activation state, **characterized by**
   - conversion of the data string to the activation states of the first and second transformers (10, 20) such that the first and second transformers (10, 20) alternately assume an activation state for an activation period, with a succession of state changes which respectively comprise deactivation of one transformer and activation of the other transformer being dependent on the data string.

**2.** Data transmission method according to claim 1, in which the data string is converted to the activation states such that at least three different activation states arise.

**3.** Data transmission method according to claim 1 or 2, in which the primary windings of the first and second transformers respectively have a first and a second connection and in which an activation state for a transformer is achieved by applying a voltage potential to one of the connections of the primary winding.

**4.** Data transmission method according to one of the preceding claims, in which the transformers change from an activation state to the quiescent state and from the quiescent state to an activation state within a change period, where a first change period for the activation of the first-activated transformer for transmitting the data string is chosen such that it is longer than the change period for a state change.

**5.** Data transmission method according to claim 4, in which a final change period for the deactivation of the last-activated transformer is longer than the change period for a state change.

**6.** Data transmission method according to one of the preceding claims, in which the primary windings respectively have a time constant and in which the activation periods are respectively longer than these time constants.

**7.** Data transmission method according to claim 6, in which the activation periods are 1.5 times to 2.5 times the time constants.

**8.** Data transmission method according to claim 4, in which the first change period is longer than the time constants.

**9.** Data transmission method according to claim 5, in which the final change period is longer than the time constants.

**10.** Data transmission method according to one of the preceding claims, in which the transformers are air-core transformers.

**11.** Data transmission method according to one of the preceding claims, in which a plurality of transmission sequences which are respectively separated by pauses are produced.

12. Data transmission method according to claim 11, in which a transmission sequence comprises a maximum of four state changes.

13. Data transmission method according to claim 12, in which a transmission sequence contains each possible state change a maximum of only once.

14. Data transmission method according to one of the preceding claims, in which secondary voltages from the transformers (10, 20) are evaluated in order to detect state changes in the first and second transformers (10, 20).

15. Data transmission method according to claim 14, in which the state changes detected on the secondary side during a transmission sequence are stored and are evaluated after the end of the transmission sequence.

16. Data transmission method according to claim 15, in which the order of the state changes is evaluated.

**Revendications**

1. Procédé de transmission de données pour transmettre un train de données sur une barrière de potentiel ayant les stades de procédés suivants :

   - on se procure un premier transformateur (10) ayant un enroulement (11) primaire et un enroulement (12) secondaire, qui peut prendre un état de repos et un premier et un deuxième état d'activation,
   - on se procure un deuxième transformateur (20) ayant un enroulement (21) et un enroulement (22) secondaire, qui peut prendre un état de repos et un premier et un deuxième état d'activation, **caractérisé en ce que**
   - on transforme le train de données sur les états d'activation du premier et du deuxième transformateur (10, 20) de sorte que le premier et le deuxième transformateur (10, 20) prennent en alternance pendant une durée d'activation un état d'activation, dans lequel une succession de transitions d'état, qui comprennent respectivement une désactivation d'un transformateur et une activation de l'autre transformateur, dépend du train de données.

2. Procédé de transmission de données suivant la revendication 1, dans lequel la transformation du train de données sur les états d'activation s'effectue de façon à ce qu'il se produise au moins trois états d'activation différent.

3. Procédé de transmission de données suivant la revendication 1 ou 2, dans lequel les enroulements primaires du premier et du deuxième transformateur ont respectivement une première et une deuxième borne et dans lequel un état d'activation d'un transformateur est obtenu par application d'un potentiel de tension à l'une des bornes de l'enroulement primaire.

4. Procédé de transmission de données suivant l'une des revendications précédentes, dans lequel une transition du transformateur d'un état d'activation à l'état de repos et del'état de repos à un état d'activation s'effectue pendant une durée de transition, dans lequel on choisit pour la transmission du train de données une première durée de transition lors de l'activation du transformateur activé d'abord, durée qui est plus grande que la durée de transition pour une transition d'état.

5. Procédé de transmission de données suivant la revendication 4, dans lequel une dernière durée de transition lors de la désactivation du transformateur activé d'abord est plus grande que la durée de transition pour une transition d'état.

6. Procédé de transmission de données suivant l'une des revendications précédentes, dans lequel les enroulements primaires ont respectivement une constante de temps et dans lequel les durées d'activation sont plus grandes respectivement que ces constantes de temps.

7. Procédé de transmission de données suivant la revendication 6, dans lequel les durées d'activation représentent de 1,5 fois à 2,5 fois les constantes de temps.

8. Procédé de transmission de données suivant la revendication 4, dans lequel la première durée de transition est plus grande que les constantes de temps.

9. Procédé de transmission de données suivant la revendication 5, dans lequel la dernière durée de transition est plus grande que les constantes de temps.

10. Procédé de transmission de données suivant l'une des revendications précédentes, dans lequel les transformateurs sont des transformateurs à bobine sans fer.

11. Procédé de transmission de données suivant l'une des revendications précédentes, dans lequel on produit plusieurs séquences d'émission séparées respectivement par des intervalles.

12. Procédé de transmission de données suivant la revendication 11, dans lequel une séquence d'émission comprend au maximum quatre transitions d'état.

13. Procédé de transmission de données suivant la revendication 12, dans lequel une séquence d'émission n'a chaque transition d'état possible au maximum qu'une seule fois.

14. Procédé de transmission de données suivant l'une des revendications précédentes, dans lequel on exploite des tensions secondaires des transformateurs (10, 20) pour détecter des transitions d'état du premier et du deuxième transformateur (10, 20).

15. Procédé de transmission de données suivant la revendication 14, dans lequel on mémorise les transitions d'état détectées du côté secondaire pendant une séquence d'émission et on les exploite après la fin de la séquence d'émission.

16. Procédé de transmission de données suivant la revendication 15, dans lequel on exploite la succession des transitions d'état.

FIG 1

EP 1 909 404 B1

FIG 2

FIG 3

FIG 4

FIG 5

FIG 6

FIG 7

FIG 8

22

FIG 9

FIG 10

FIG 11

```
0   O        O        O        O        O

1   O        O        O        O        O

2   O        O        O        O        O

3   O        O        O        O        O

4   O        O        O        O        O

5   O        O        O        O        O

6   O        O        O        O        O

7   O        O        O        O        O
```

D =      0      1      1      0

S =     100    001    111    100

FIG 12

EP 1 909 404 B1

FIG 13

FIG 14

| $\hat{z}[i+1]-\hat{z}[i-1]$ | $\hat{z}[i]$ | |
|:---:|:---:|:---:|
| | $\hat{z}[i-1]$ gerade | $\hat{z}[i-1]$ ungerade |
| 0 | 0 | ungültig |
| 1 | 0 | 0 |
| 2 | 1 | 0 |
| 3 | 1 | 1 |
| 4 | ungültig | 1 |
| 5 | ungültig | ungültig |
| 6 | ungültig | ungültig |
| 7 | ungültig | ungültig |

FIG 15

$\hat{z}[i-2]$ $\quad$ $\hat{z}[i-1]$ $\quad$ $\hat{z}[i]$ $\quad$ $\hat{z}[i+1]$ $\quad$ $\hat{z}[i+2]$

+ $\qquad$ − $\qquad$ − $\qquad$ +

FIG 16

$\hat{z}[i-2]$ $\quad$ $\hat{z}[i-1]$ $\quad$ $\hat{z}[i]$ $\quad$ $\hat{z}[i+1]$ $\quad$ $\hat{z}[i+2]$

+ $\qquad$ − $\qquad$ + $\qquad$ +

FIG 17

$z'[i-4]$   $z'[i-3]$   $z'[i-2]$   $z'[i-1]$   $z'[i]$   $z'[i+1]$

+          0          0          −          +

FIG 18

| $z'[i] - z'[i-4]$ | N | |
|---|---|---|
| | $z'[i-4]$ gerade | $z'[i-4]$ ungerade |
| 0 | 0 | 3 |
| 1 | 0 | 0 |
| 2 | 1 | 0 |
| 3 | 1 | 1 |
| 4 | 2 | 1 |
| 5 | 2 | 2 |
| 6 | 3 | 2 |
| 7 | 3 | 3 |

FIG 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10205705
- US 6525566 B
- DE 102004039218 A1